(19) Europäisches Patentamt
European Patent Office
Office européen des brevets

(11) EP 3 713 974 B1

(12) **FASCICULE DE BREVET EUROPEEN**

(45) Date de publication et mention de la délivrance du brevet:
**04.01.2023 Bulletin 2023/01**

(21) Numéro de dépôt: **18826763.7**

(22) Date de dépôt: **16.11.2018**

(51) Classification Internationale des Brevets (IPC):
***C08F 220/58*** *(2006.01)* ***C08J 3/09*** *(2006.01)*
***C08F 2/30*** *(2006.01)* ***C08F 2/32*** *(2006.01)*
***C11D 1/66*** *(2006.01)* ***C11D 1/94*** *(2006.01)*
***C11D 3/20*** *(2006.01)* ***C11D 3/37*** *(2006.01)*
***C08K 5/04*** *(2006.01)* ***C11D 11/00*** *(2006.01)*
***C11D 17/00*** *(2006.01)*

(52) Classification Coopérative des Brevets (CPC):
(C-Sets disponibles)
**C08F 2/30; C08F 2/32; C08F 220/585; C08K 5/04; C11D 1/662; C11D 3/2024; C11D 3/2065; C11D 3/3746; C11D 3/3765; C11D 3/378; C11D 7/26; C11D 11/0023; C11D 17/0017; C11D 17/0021** (Cont.)

(86) Numéro de dépôt international:
**PCT/FR2018/052885**

(87) Numéro de publication internationale:
**WO 2019/102115 (31.05.2019 Gazette 2019/22)**

(54) **LATEX INVERSE AUTO-INVERSIBLE, COMPRENANT COMME AGENT INVERSEUR DES ALKYLPOLYGLYCOSIDES ET SON UTILISATION COMME AGENT ÉPAISSISSANT D'UNE FORMULATION DÉTERGENTE OU NETTOYANTE À USAGE INDUSTRIEL OU MÉNAGER**

SELBSTINVERTIERENDER INVERSER LATEX MIT ALKYLPOLYGLYCOSIDEN ALS INVERTIERUNGSMITTEL UND VERWENDUNG DAVON ALS VERDICKUNGSMITTEL FÜR EINE WASCH- ODER REINIGUNGSFORMULIERUNG FÜR INDUSTRIELLE ODER PRIVATE ANWENDUNGEN

SELF-INVERTIBLE INVERSE LATEX COMPRISING ALKYL POLYGLYCOSIDES AS AN INVERTING AGENT AND USE THEREOF AS A THICKENING AGENT FOR A DETERGENT OR CLEANING FORMULATION FOR INDUSTRIAL OR DOMESTIC USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2017 FR 1760985**

(43) Date de publication de la demande:
**30.09.2020 Bulletin 2020/40**

(73) Titulaire: **Société d'Exploitation de Produits pour les Industries Chimiques SEPPIC**
**75321 Paris Cedex 7 (FR)**

(72) Inventeurs:
- **BODOC, Miruna**
  **75321 Paris Cedex 07 (FR)**
- **DACOSTA, Georges**
  **81710 Saix (FR)**
- **GUILBOT, Jérôme**
  **81100 Castres (FR)**
- **PIERRE, Aurélie**
  **75321 Paris Cedex 07 (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(56) Documents cités:
**EP-A1- 0 939 670** **EP-A1- 1 055 451**
**EP-A1- 1 173 273** **US-A- 3 598 865**

(52) Classification Coopérative des Brevets (CPC):
(Cont.)

C-Sets
**C08K 5/04, C08L 33/24;**
C08F 220/585, C08F 220/06, C08F 222/385

## Description

L'invention concerne des latex inverses auto-inversibles comprenant comme agent inverseur, une composition tensioactive comprenant des alkylpolyglycosides, l'utilisation desdits latex inverses auto-inversibles comme épaississants utilisés pour préparer des formulations détergentes ou nettoyantes à usage industriel ou ménager, ainsi que ces formulations. Par formulations détergentes ou nettoyantes à usage industriel ou ménager, on entend au sens de la présente demande de brevet, des compositions conçues et utilisées pour le nettoyage de différents types de surfaces, comme par exemple les fibres textiles, les surfaces dures de différentes natures comme par exemple le verre, la céramique, les carrelages, le bois, le métal, les matériaux composites.

Ces formulations détergentes ou nettoyantes à usage industriel ou ménager sont utiliser par exemple pour nettoyer la vaisselle, les bouteilles, ou le linge, que ce soit manuellement ou en machines à laver, les sols, les surfaces métalliques les vitres ou les cuves de stockage. Elles sont, soit alcalines soit acides. Les formulations alcalines sont généralement utilisées pour éliminer des surfaces dures, les salissures de matières grasses, alors que les formulations acides le sont non seulement pour éliminer les salissures et mais aussi pour détartrer lesdites surfaces ; Elles sont particulièrement adaptées au nettoyage et au détartrage d'installations de l'industrie agro-alimentaire, ou au détartrage d'équipements électroménagers, tels que lave-vaisselle et machines à café. Elles sont aussi utilisées pour éliminer des résidus de béton ou de ciment, et pour des opérations de nettoyage de graisses présentes en profondeur sur des surfaces de béton avant toute opération de peinture desdites surfaces de béton.

Les formulations détergentes acides ne doivent ne pas provoquer une formation importante de lors de l'opération de nettoyage en présence de la salissure à traiter, elles avoir de bonnes propriétés mouillantes et détergentes.

Les formulations détergentes ou nettoyantes à usage industriel ou ménager se présentent de poudres de concentrés, de liquides tels que les émulsions, et selon les cas sont mises en oeuvre directement ou après dilution dans un solvant approprié.

Sous forme liquide, telle que les émulsions, elles comportent des modificateurs de rhéologie lors de leur fabrication.

Ces modificateurs de rhéologie sont de préférence des agents épaississants et/ou gélifiants qui ont pour objet d'épaissir la phase aqueuse ou l'émulsion comprenant les tensioactifs détergents, de façon à permettre à l'utilisateur d'en maîtriser l'écoulement, par exemple par l'intermédiaire d'une pompe à circulation, et également à pouvoir suspendre et/ou stabiliser des particules solides. Parmi les agents modificateurs de rhéologie que l'on peut utiliser pour la préparation de formulations détergentes ou nettoyantes à usage industriel ou ménager », on peut citer des polymères synthétiques comme par exemple les polyélectrolytes anioniques, ou cationiques, ou ampholytes, linéaires ou ramifiés, réticulés ou non réticulés, se présentent sous deux formes physiques, la forme poudre et la forme liquide.

La demande internationale publiée sous le numéro WO 2016/020622 A1 décrit l'utilisation, pour la fabrication d'une composition aqueuse liquide détergente à usage ménager ou industriel, d'un polymère branché ou réticulé obtenu par polymérisation d'une solution aqueuse d'un ou plusieurs monomères en émulsion inverse de type eau-dans-huile, avec au moins un des monomères utilisés étant un monomère acrylique et un ou plusieurs des monomères utilisés étant un monomère porteur d'au moins une fonction acide faible, le pourcentage molaire de monomères porteurs d'au moins une fonction acide faible par rapport à l'ensemble des monomères utilisés étant au moins de 30%.

Dans les procédés de préparation de latex inverses auto-inversibles par la mise en œuvre d'une polymérisation radicalaire en émulsion inverse, les tensioactifs de type huile-dans-eau sont ajoutés à l'issue de l'étape de polymérisation. Leur ajout a pour objet de modifier et de régler la balance hydrophile-lipophile de l'émulsion eau-dans-huile comprenant le polymère (également nommée « latex inverse ») de façon à obtenir un mélange qui, une fois ajouté dans une phase polaire comme par exemple l'eau, changera de sens d'émulsion pour passer de la forme eau-dans-huile vers la forme huile-dans-eau, permettant alors de mettre en contact le polymère précédemment préparé avec la phase polaire à épaissir. Lors d'un tel phénomène physique, le polymère de type polyélectrolyte réticulé et/ou branché se déploie dans ladite phase polaire et forme un réseau tridimensionnel permettant à la phase polaire de gonfler, ce qui se manifeste par une augmentation de la viscosité de cette phase polaire.

Le mélange comprenant le « latex inverse » et le tensioactif de type huile-dans-eau est nommé latex inverse auto-inversible et ledit tensioactif de type huile-dans-eau est nommé « inverseur » ou « agent inverseur ».

Les agents inverseurs couramment utilisés pour la préparation des latex inverses auto-inversibles sont des agents tensioactifs de type huile-dans-eau qui possèdent une valeur de HLB (« Hydrophilic Lipophilic Balance ») suffisamment élevée pour permettre de préparer des émulsions de type huile-dans-eau stables, généralement supérieur à 9 et inférieur à 16. Ils comprennent généralement une partie hydrophile constituée par un enchaînement de motifs d'oxyde d'éthylène et une partie consistant en une chaîne aliphatique hydrocarbonée de nature hydrophobe. Parmi ces agents inverseurs, on peut citer :

- Les alcools gras éthoxylés, dont la chaîne aliphatique hydrocarbonée comporte de 8 à 14 atomes de carbone et dont le nombre de motifs d'oxyde d'éthylène est compris entre 5 et 40, par exemple l'alcool laurique éthoxylé à 7

moles d'oxyde d'éthylène (nom INCI : Laureth-7), ou l'alcool tridécylique à 6 moles d'oxyde d'éthylène (nom INCI : trideceth-6) ;

- Les esters de sorbitan éthoxylés, dont la chaîne aliphatique hydrocarbonée comporte de 12 à 22 atomes de carbone et dont le nombre de motifs d'oxyde d'éthylène est compris entre 5 et 40, par exemple l'oléate de sorbitan éthoxylé à 20 moles d'oxyde d'éthylène commercialisé sous le nom commercial Montanox™80, ou le laurate de sorbitan éthoxylé à 20 moles d'oxyde d'éthylène commercialisé sous le nom commercial Montanox™20 ;

Les alkylphénols éthoxylés, par exemple les nonylphénols éthoxylés et les octylphénols éthoxylés ; ou
Les huiles de ricin éthoxylées, par exemple l'huile de ricin éthoxylée à 40 moles d'oxyde d'éthylène commercialisée sous le nom de marque SIMULSOL™OL 50.

L'évolution des exigences des consommateurs et des dispositions réglementaires amènent les concepteurs de produits de détergence ménagère et industrielle, à diminuer la proportion d'ingrédients comportant des motifs d'oxyde d'éthylène dans leurs formulations. Il existe donc un besoin de préparer des latex inverses auto-inversibles exempts de tensioactifs éthoxylés comme agents inverseurs.

Les demandes de brevet français publiées sous les numéros 2 794 034, 2 794 124, 2 808 447, 2 808 446 et 2 810 883 décrivent l'utilisation d'alkylpolyglycosides, dont la chaîne alkyle hydrocarbonée comporte d'un à trente atomes de carbone, par exemple des mélanges d'alkylpolyglucosides dont les chaînes alkyles hydrocarbonées sont des chaînes décyle, dodécyle et tétradécyle comme le mélange commercialisé sous le nom de marque SIMULSOL™SL 10, des chaînes dodécyle, tétradécyle et hexadécyle comme le mélange commercialisé sous le nom de marque SIMULSOL™SL 26, des chaînes octyle et décyle comme le mélange commercialisé sous le nom de marque SIMULSOL™SL 8, ou la chaîne undécylènyle comme le mélange commercialisé sous le nom de marque SIMULSOL™SL 11 W. EP0939670 et EP1173273 décrivent des agents tensioactifs non-ioniques sur base l'alkylpolyglycosides et des émulsion les contenant.

Cependant, la mise en oeuvre de tels composés pour préparer des latex inverses auto-inversibles, doit se réaliser à une température supérieure à leur point de fusion, soit généralement à une température supérieure à 70°C, ce qui pose des problèmes de déstabilisation du latex inverse et entraîne une certaine déstabilisation du latex inverse auto-inversible préparé. Dans certain cas elle est réalisée en diluant préalablement lesdits alkylpolyglycosides dans l'eau pour disposer d'une forme liquide et manipulable à température ambiante. Ceci a parfois pour conséquence de diminuer la vitesse d'inversion desdits latex inverses auto-inversibles dans les phases polaires à épaissir, et donc de diminuer la productivité des procédés de préparation des formulations cosmétiques comprenant de tels agents épaississants.

Il subsiste donc une nécessité de mettre au point un système tensioactif de type huile-dans-eau, dont les tensioactifs constitutifs montrent une bonne adéquation envers les normes environnementales en vigueur en étant notamment exempts de motifs d'oxyde d'alkylène (comme par exemple d'oxyde d'éthylène), et qui permettent de préparer des latex inverses auto-inversibles qui puissent être utilisables facilement et notamment qui puissent être pompés à 25°C, qui aient une viscosité inférieure ou égale à 8.000 mPa.s, de préférence inférieure ou égale à 5.000 mPa.s, viscosité mesurée à 25°C à l'aide d'un viscosimètre Brookfield RVT et du mobile n°3 à la vitesse de 20 tours/minute, qui présentent un aspect lisse, exempts de grains ou de grumeaux, et qui possèdent de bonnes propriétés d'inversion dans des phases polaires c'est-à-dire induisant une vitesse d'inversion rapide, inférieure à 15 minutes, de préférence inférieure à 10 minutes, permettant au polymère compris dans le latex inverse auto-inversible d'exprimer toute sa capacité épaississante.

Selon un premier aspect, l'invention, telle que définie dans les revendcations, a pour objet une émulsion de type eau-dans-huile (E) comprenant pour 100% de sa masse :

a) - de 10% massique à 80% massique, d'un polymère (P) réticulé, issu de la polymérisation pour 100% molaire :

**($a_1$)** - d'une proportion supérieure ou égale à 30% molaire et inférieure ou égale à 100% molaire, d'unités monomériques issues d'un monomère possédant une fonction acide fort, partiellement salifiée ou totalement salifiée ; et

**($a_2$)** - Optionnellement d'une proportion supérieure à 0% molaire et inférieure ou égale à 70% molaire, d'unités monomériques issues d'au moins un monomère choisi parmi les éléments du groupe constitué par l'acide acrylique, l'acide méthacrylique, l'acide itaconique, l'acide maléique, l'acide 3-méthyl 3-[(1-oxo 2-propènyl) amino] butanoïque, la fonction carboxylique desdits monomères étant sous forme acide, partiellement salifiés ou totalement salifiés et/ou parmi les éléments du groupe constitué par l'acrylate de (2-hydroxy éthyle), l'acrylate de (2,3-dihydroxy propyle), le méthacrylate de (2-hydroxy éthyle), le méthacrylate de (2,3-dihydroxy propyle) ou le vinyl pyrrolidone ;

**($a_3$)** - d'une proportion supérieure à 0% molaire et inférieure ou égale à 1% molaire d'unités monomériques issues d'au moins un monomère de réticulation (AR) diéthylénique ou polyéthylénique ;

étant entendu que la somme des proportions molaires des unités monomériques ($a_1$), (a2) et (a3) est égale à 100% ;

**b)** - de 5% massique à 50% massique, plus particulièrement de 5% massique à 45% massique, et encore plus particulièrement de 5% massique à 40% massique, d'une phase grasse constituée d'au moins une huile (H), et

**c)** - de 1% massique à 50% massique, plus particulièrement de 5% massique à 45% massique, et encore plus particulièrement de 5% massique à 40% massique d'eau, et

**d)** - de 0,5% massique à 10% massique, plus particulièrement de 0,5% massique à 8% massique, et encore plus particulièrement de 0,5% massique à 7% massique d'un système émulsionnant ($S_1$) de type eau-dans-huile, et

**e)** - de 2% massique à 10% massique, plus particulièrement de 2% massique à 8% massique et encore plus particulièrement de 4% massique à 7% massique d'un système émulsionnant ($S_2$) de type huile-dans-eau comprenant pour 100% de sa masse, au moins 50% massique d'une composition ($C_e$) comprenant pour 100% de sa masse :

**$e_1$)** - Une proportion supérieure ou égale à 20% massique et inférieure ou égale à 80% massique d'un agent diluant de formule (I) :

$$HO\text{-}[CH_2\text{-}CH(OH)\text{-}CH_2\text{-}O\text{-}]_n\text{-}H \quad (I),$$

dans laquelle n représente un nombre entier supérieur ou égal à 1 et inférieur ou égal à 6, ou d'un mélange desdits agents diluants,

**$e_2$)** - Une proportion supérieure ou égale à 20% massique et inférieure ou égale à 80% massique d'une composition ($C_{e2}$) comprenant pour 100% de sa masse :

**$e_{2\alpha}$)** - Une proportion supérieure à 0% et inférieure ou égale à 4% massique d'au moins un alcool de formule (II) :

$$C_mH_{2m+1}\text{-}OH \quad (II),$$

dans laquelle m représente un nombre entier pair supérieur ou égal à 8 et inférieur ou égal à 18 ;

**$e_{2\beta}$)** - Une proportion supérieure ou égale à 96% massique et inférieure à 100% massique d'une composition ($C_{2\beta}$) comprenant :

**$e_{2\beta 2}$)** - Une proportion supérieure ou égale à 60% massique et inférieure ou égale 90% massique d'une composition ($C_{2\beta 2}$) comprenant pour 100% de sa masse :

**$e_{2\beta 21}$)** - Une proportion supérieure ou égale à 5% massique et inférieure ou égale à 20% massique d'une composition ($C_{21}$) représentée par la formule (III) :

$$R_{21}\text{-}O\text{-}(G_{21})_r\text{-}H \quad (III),$$

dans laquelle $R_{21}$ représente le radical n-dodécyle, $G_{21}$ représente le reste d'un sucre réducteur et r représente un nombre décimal supérieur ou égal à 1,05 et inférieur ou égal à 5,00, ladite composition ($C_{21}$) consistant en un mélange des composés de formules ($III_1$), ($III_2$), ($III_3$), ($III_4$) et ($III_5$) :

$$R_{21}\text{-}O\text{-}(G_{21})_1\text{-}H \quad (III_1),$$

$$R_{21}\text{-}O\text{-}(G_{21})_2\text{-}H \quad (III_2),$$

$$R_{21}\text{-}O\text{-}(G_{21})_3\text{-}H \quad (III_3),$$

$$R_{21}\text{-}O\text{-}(G_{21})_4\text{-}H \quad (III_4),$$

$$R_{21}\text{-}O\text{-}(G_{21})_5\text{-}H \quad (III_5),$$

en des proportions molaires en dits composés de formules ($III_1$), ($III_2$), ($III_3$), ($III_4$) et ($III_5$) respectivement égales à $a_1$, $a_2$, $a_3$, $a_4$ et $a_5$, telles que la somme $a_1 + a_2 + a_3 + a_4 + a_5$ est égale à un, et que la somme $a_1 + 2a2 + 3a3 + 4a4 + 5a5$ est égale à r ;

**$e_{2\beta22}$)** - Une proportion supérieure ou égale à 10% massique et inférieure ou égale à 20% massique d'une composition ($C_{22}$) représentée par la formule (IV) :

$R_{22}$-O-$(G_{22})_s$-H (IV),

dans laquelle $R_{22}$ représente le radical n-tétradécyle, $G_{22}$ représente le reste d'un sucre réducteur et s représente un nombre décimal supérieur ou égal à 1,05 et inférieur ou égal à 5,00, ladite composition ($C_{22}$) consistant en un mélange des composés de formules ($IV_1$), ($IV_2$), ($IV_3$), ($IV_4$) et ($IV_5$) :

$R_{22}$-O-$(G_{22})_1$-H ($IV_1$),

$R_{22}$-O-$(G_{22})_2$-H ($IV_2$),

$R_{22}$-O-$(G_{22})_3$-H ($IV_3$),

$R_{22}$-O-$(G_{22})_4$-H ($IV_4$),

$R_{22}$-O-$(G_{22})_5$-H ($IV_5$),

en des proportions molaires en dits composés de formules ($IV_1$), ($IV_2$), ($IV_3$), ($IV_4$) et ($IV_5$) respectivement égales à $b_1$, $b_2$, $b_3$, b4 et $b_5$, telles que la somme : $b_1$+ $b_2$ + $b_3$ + $b_4$ + $b_5$ est égale à un, et que la somme $b_1$ + $2b_2$ + $3b_3$ + $4b_4$ + $5b_5$ est égale à s ;

**$e_{2\beta23}$)** - Une proportion supérieure ou égale à 25% massique et inférieure ou égale à 40% massique d'une composition ($C_{23}$) représentée par la formule (V) :

$R_{23}$-O-$(G_{23})_t$-H (V),

dans laquelle $R_{23}$ représente le radical n-octyle, $G_{23}$ représente le reste d'un sucre réducteur et t représente un nombre décimal supérieur ou égal à 1,05 et inférieur ou égal à 5,00, ladite composition ($C_{23}$) consistant en un mélange des composés de formules ($V_1$), ($V_2$), ($V_3$), ($V_4$) et ($V_5$) :

$R_{23}$-O-$(G_{23})_1$-H ($V_1$),

$R_{23}$-O-$(G_{23})_2$-H ($V_2$),

$R_{23}$-O-$(G_{23})_3$-H ($V_3$),

$R_{23}$-O-$(G_{23})_4$-H ($V_4$),

$R_{23}$-O-$(G_{23})_5$-H ($V_5$),

en des proportions molaires en dits composés de formules ($V_1$), ($V_2$), ($V_3$), ($V_4$) et ($V_5$) respectivement égales à $c_1$, $c_2$, $c_3$, $c_4$ et $c_5$, telles que la somme : $c_1$+ $c_2$ + $c_3$ + $c_4$ + $c_5$ est égale à un, et que la somme $c_1$ + $2c_2$ + $3c_3$ + $4c_4$ + $5c_5$ est égale à t ;

**$e_{2\beta24}$)** - Une proportion massique supérieure ou égale à 30% massique et inférieure ou égale à 55% massique d'une composition ($C_{24}$) représentée par la formule (VI) :

$R_{24}$-O-$(G_{24})_u$-H (VI),

dans laquelle $R_{24}$ représente le radical n-décyle, $G_{24}$ représente le reste d'un sucre réducteur et u représente un nombre décimal supérieur ou égal à 1,05 et inférieur ou égal à 5,00, ladite composition ($C_{24}$) consistant en un mélange des composés de formules ($VI_1$), ($VI_2$), ($VI_3$), ($VI_4$) et ($VI_5$) :

$R_{24}$-O-$(G_{24})_1$-H ($VI_1$),

$R_{24}$-O-$(G_{24})_2$-H ($VI_2$),

$R_{24}$-O-$(G_{24})_3$-H ($VI_3$),

$R_{24}$-O-$(G_{24})_4$-H (VI$_4$),

$R_{24}$-O-$(G_{24})_5$-H (VI$_5$),

en dans les proportions molaires en dits composés de formules (VI$_1$), (VI$_2$), (VI$_3$), (VI$_4$) et (VI$_5$) respectivement égales à $d_1$, $d_2$, $d_3$, $d_4$ et $d_5$, telles que la somme : $d_1 + d_2 + d_3 + d_4 + d_5$ est égale à un, et que la somme $d_1 + 2d_2 + 3d_3 + 4d_4 + 5d_5$ est égale à u ; étant entendu que la somme des proportions massiques des compositions ($C_{21}$), ($C_{22}$), ($C_{23}$), et ($C_{24}$), est égale à 100% ;
**$e_{2\beta3}$)** - une proportion supérieure ou égale à 10% massique et inférieure ou égale à 40% massique d'une composition ($C_{2\beta3}$) comprenant pour 100% de sa masse :
**$e_{2\beta31}$)** - Une proportion supérieure ou égale à 30% massique et inférieure ou égale à 50% massique d'une composition ($C_{31}$) représentée par la formule (VII) :

$R_{31}$-O-$(G_{31})_x$-H (VII)

dans laquelle $R_{31}$ représente le radical n-hexadécyle, $G_{31}$ représente le reste d'un sucre réducteur et x représente un nombre décimal supérieur ou égal à 1,05 et inférieur ou égal à 5,00, ladite composition ($C_{31}$) consistant en un mélange des composés de formules (VII$_1$), (VII$_2$), (VII$_3$), (VII$_4$) et (VII$_5$) :

$R_{31}$-O-$(G_{31})_1$-H (VII$_1$),

$R_{31}$-O-$(G_{31})_2$-H (VII$_2$),

$R_{31}$-O-$(G_{31})_3$-H (VII$_3$),

$R_{31}$-O-$(G_{31})_4$-H (VII$_4$),

$R_{31}$-O-$(G_{31})_5$-H (VII$_5$),

en des proportions molaires en dits composés de formules (VII$_1$), (VII$_2$), (VII$_3$), (VII$_4$) et (VII$_5$) respectivement égales $a'_1$, $a'_2$, $a'_3$, $a'_4$ et $a'_5$, telles que la somme $a'_1 + a'_2 + a'_3 + a'_4 + a'_5$ est égale à un, et que la somme $a'_1 + 2a'2 + 3a'3 + 4a'4 + 5a'5$ est égale à x ;
**$e_{2\beta32}$)** - Une proportion supérieure ou égale à 50% massique et inférieure ou égale à 70% massique d'une composition ($C_{32}$) représentée par la formule (VIII) :

$R_{32}$-O-$(G_{32})_y$-H (VIII),

dans laquelle $R_{32}$ représente le radical n-octadécyle, $G_{32}$ représente le reste d'un sucre réducteur et y représente un nombre décimal supérieur ou égal à 1,05 et inférieur ou égal à 5,00,
ladite composition ($C_{32}$) consistant en un mélange des composés de formules (VIII$_1$), (VIII$_2$), (VIII$_3$), (VIII$_4$) et (VIII$_5$) :

$R_{32}$-O-$(G_{32})_1$-H (VIII$_1$),

$R_{32}$-O-$(G_{32})_2$-H (VIII$_2$),

$R_{32}$-O-$(G_{32})_3$-H (VIII$_3$),

$R_{32}$-O-$(G_{32})_4$-H (VIII$_4$),

$R_{32}$-O-$(G_{32})_5$-H (VIII$_5$),

en des proportions molaires en dits composés de formules (VIII$_1$), (VIII$_2$), (VIII$_3$), (VIII$_4$) et (VIII$_5$) respectivement égales à $b'_1$, $b'2$, $b'_3$, $b'_4$ et $b'_5$, telles que la somme $b'_1 + b'_2 + b'_3 + b'_4 + b'_5$ est égale à un, et que la somme $b'_1 + 2b'_2 + 3b'_3 + 4b'_4 + 5b'_5$ est égale à y, étant entendu que la somme des proportions massiques des compositions ($C_{31}$) et ($C_{32}$) est égale à 100%, et
étant entendu que la somme des proportions massiques des composés (a), (b), (c), (d) et (e) est égale à

100%.

Au sens de la présente invention, par « polymère réticulé », on désigne pour le polymère (P), un polymère non linéaire qui, lorsqu'ajouté à de l'eau, se présente à l'état d'un réseau tridimensionnel insoluble dans l'eau, mais gonflable à l'eau et conduisant alors à l'obtention d'un gel chimique.

Au sens de la présente invention, dans le polymère (P) tel que défini précédemment, le terme «salifié» indique que la fonction acide forte présente dans le monomère se trouve sous une forme anionique associée sous forme de sel à un cation, notamment les sels de métaux alcalins, tels que les cations du sodium ou du potassium, ou comme les cations de base azotés tels que le sel d'ammonium, le sel de lysine ou le sel de 2-hydroxy éthanammonium ($HO-CH_2-CH_2-NH_4^+$).

La fonction acide fort du monomère en comportant est notamment la fonction acide sulfonique ou la fonction acide phosphonique. Ledit monomère est par exemple, l'acide styrènesulfonique partiellement ou totalement salifié ou, de préférence l'acide 2-méthyl 2-[(1-oxo 2-propènyl) amino] 1-propanesulfonique partiellement ou totalement salifiée.

Selon un aspect particulier de la présente invention, le monomère possédant une fonction acide fort est l'acide 2-méthyl 2-[(1-oxo 2-propènyl) amino] 1-propanesulfonique, et plus particulièrement le sel de sodium ou d'ammonium de l'acide 2-méthyl 2-[(1-oxo 2-propènyl) amino] 1-propanesulfonique.

Selon un autre aspect particulier de la présente invention, ledit polymère (P) réticulé, est issu de la polymérisation pour 100% molaire :

**($a_1$)** - d'une proportion supérieure ou égale à 40% molaire et inférieure ou égale à 100% molaire, d'unités monomériques issues d'un monomère possédant une fonction acide fort, partiellement salifiée ou totalement salifiée,

Selon une première alternative particulière de la présente invention, ledit polymère (P) réticulé, est un homopolymère réticulé de l'acide 2-méthyl 2-[(1-oxo 2-propènyl) amino] 1-propanesulfonique partiellement ou totalement salifiée.

Selon une deuxième alternative particulière de la présente invention, ledit polymère (P) réticulé, est un copolymère réticulé de l'acide 2-méthyl 2-[(1-oxo 2-propènyl) amino] 1-propanesulfonique partiellement ou totalement salifiée et d'au moins un monomère choisi parmi l'acide acrylique, l'acide méthacrylique partiellement ou totalement salifié, l'acrylate de (2-hydroxy éthyle), l'acrylate de (2,3-dihydroxy propyle), le méthacrylate de (2-hydroxy éthyle), le méthacrylate de (2,3-dihydroxy propyle) et le vinyl pyrrolidone.

Selon un autre aspect particulier de la présente invention l'émulsion de type eau-dans huile (E) telle que définie ci-dessus comprend de 20% massique à 80% massique et plus particulièrement de 30% massique à 80% massique dudit polymère (P).

Lorsque ledit polymère (P) est un copolymère réticulé, il est particulièrement issu de la polymérisation, pour 100% molaire,

**($a_1$)** - d'une proportion supérieure ou égale à 40% molaire et inférieure à 100% molaire, d'unités monomériques issues d'un monomère possédant une fonction acide fort, partiellement salifiée ou totalement salifiée ; et

**($a_2$)** - d'une proportion supérieure à 0% molaire et inférieure ou égale à 60% molaire, d'unités monomériques issues d'au moins un monomère choisi parmi les éléments du groupe constitué par l'acide acrylique, l'acide méthacrylique, l'acide itaconique, l'acide maléique, l'acide 3-méthyl 3-[(1-oxo 2-propènyl) amino] butanoïque, la fonction carboxylique desdits monomères étant sous forme acide, partiellement salifiés ou totalement salifiés et/ou parmi les éléments du groupe constitué par l'acrylate de (2-hydroxy éthyle), l'acrylate de (2,3-dihydroxy propyle), le méthacrylate de (2-hydroxy éthyle), le méthacrylate de (2,3-dihydroxy propyle) ou le vinyl pyrrolidone ;

**($a_3$)** - d'une proportion supérieure à 0% molaire et inférieure ou égale à 1% molaire d'unités monomériques issues d'au moins un monomère de réticulation diéthylénique ou polyéthylénique ;

étant entendu que la somme des proportions molaires des unités monomériques ($a_1$), (a2) et (a3) est égale à 100%.

Par au moins un monomère de réticulation diéthylénique ou polyéthylénique, on désigne, dans la définition de l'émulsion de type eau-dans-huile (E) objet de la présente invention, un monomère notamment choisi parmi le diméthacrylate d'éthylèneglycol, le diacrylate de diéthylèneglycol, le diacrylate d'éthylèneglycol, le diallyl urée, le triallylamine, le triméthylol propanetriacrylate, le méthylène-bis(acrylamide) ou un mélange de ces composés, l'acide diallyoxyacétique ou un de ses sels comme le diallyloxyacétate de sodium, ou un mélange de ces composés.

Selon un autre aspect particulier, le monomère de réticulation est choisi parmi le diméthacrylate d'éthylèneglycol, le triallylamine, le triméthylol propanetriacrylate, et le méthylène-bis(acrylamide).

Selon un autre aspect particulier, le monomère de réticulation (AR) est mis en oeuvre dans une proportion molaire inférieure ou égale à 0,5%, plus particulièrement inférieure ou égale à 0,25% et tout particulièrement inférieure ou égales à 0,1% ; elle est plus particulièrement supérieure ou égales à 0,005% molaire.

Comme exemples de polymères réticulé (P) que l'on citer dans le cadre de la présente invention il y a plus particulièrement :

- Un homopolymère de l'acide 2-méthyl 2-[(1-oxo 2-propènyl) amino] 1-propanesulfonique partiellement ou totalement salifié sous forme de sel de sodium ou de sel d'ammonium, réticulé par le triallylamine et/ou le méthylène-bis(acrylamide) ;
- Un copolymère de l'acide 2-méthyl 2-[(1-oxo 2-propènyl) amino] 1-propanesulfonique, partiellement ou totalement salifié sous forme de sel de sodium ou de sel d'ammonium, et d'acrylate de (2-hydroxy éthyle), réticulé par le triallylamine et/ou le méthylène-bis(acrylamide) ;
- Un copolymère de l'acide 2-méthyl 2-[(1-oxo 2-propènyl) amino] 1-propanesulfonique et de l'acide acrylique partiellement ou totalement salifiés sous forme de sel de sodium ou de sel d'ammonium, réticulé par le triallylamine et/ou le méthylène-bis(acrylamide).
- Un copolymère réticulé de l'acide 2-méthyl 2-[(1-oxo 2-propènyl) amino] 1-propanesulfonique ($\gamma$) partiellement ou totalement salifié sous forme de sel de sodium, et d'acrylate de (2-hydroxy éthyle) ($\delta$) dans un rapport molaire ($\gamma$)/($\delta$) compris entre 30/70 et 90/10 ;
- Un copolymère réticulé de l'acide 2-méthyl 2-[(1-oxo 2-propènyl) amino] 1 propanesulfonique ($\gamma$) partiellement ou totalement salifié sous forme de sel de sodium, et d'acrylate de (2-hydroxy éthyle) ($\delta$) dans un rapport molaire ($\gamma$)/($\delta$) compris entre 40/60 et 90/10 ;
- Un copolymère réticulé de l'acide 2-méthyl 2-[(1-oxo 2-propènyl) amino] 1-propanesulfonique ($\gamma$) partiellement ou totalement salifié sous forme de sel de sodium, et d'acide acrylique ($\varepsilon$) partiellement ou totalement salifié sous forme de sel de sodium dans un rapport molaire ($\gamma$)/($\varepsilon$) supérieur ou égal à 30/70 et inférieur ou égal à 90/10 ; et
- Un copolymère réticulé de l'acide 2-méthyl 2-[(1-oxo 2-propènyl) amino] 1-propanesulfonique ($\gamma$) partiellement ou totalement salifié sous forme de sel de sodium, et d'acide acrylique ($\varepsilon$) partiellement ou totalement salifié sous forme de sel de sodium dans un rapport molaire ($\gamma$)/($\varepsilon$) supérieur ou égal à 40/60 et inférieur ou égal à 90/10.

Par huile, on désigne dans la définition de la composition (E) objet de la présente invention, l'huile (H) notamment :

- Les alcanes linéaires comportant de onze à dix-neuf atomes de carbone ;
- Les alcanes ramifiés, comportant de sept à quarante atomes de carbone, comme l'isododécane, l'isopentadécane, l'isohexadécane, l'isoheptadécane, l'isooctadécane, l'isononadécane ou l'isoeicosane), ou des mélanges de certains d'entre eux comme ceux cités ci-après et identifiés par leur nom INCI : C7-8 isoparaffin, C8-9 isoparaffin, C9-11 isoparaffin, C9-12 isoparaffin, C9-13 isoparaffin, C9-14 isoparaffin, C9-16 isoparaffin, C10-11 isoparaffin, C10-12 isoparaffin, C10-13 isoparaffin, C11-12 isoparaffin, C11-13 isoparaffin, C11-14 isoparaffin, C12-14 isoparaffin, C12-20 isoparaffin, C13-14 isoparaffin, C13-16 isoparaffin ;
- Les cyclo-alcanes optionnellement substitués par un ou plusieurs radicaux alkyles linéaires ou ramifies,
- Les huiles blanches minérales, comme celles commercialisées sous les noms suivants : Marcol™52, Marcol™82, Drakeol™6VR, Eolane™130, Eolane™150,
- L'hémisqualane (ou 2,6,10-triméthyl dodécane ; numéro CAS : 3891-98-3), le squalane (ou 2,6,10,15,19,23-hexamethyltétracosane), le polyisobutène hydrogéné ou le polydécène hydrogéné ;
- Les éthers d'alcool gras de formule (IX) :

$$Z_1\text{-O-}Z_2 \qquad \text{(IX)},$$

dans laquelle $Z_1$ et $Z_2$ identiques ou différents, représentent un radical alkyle linéaire ou ramifié comportant de cinq à dix-huit atomes de carbone, par exemple les dioctyl éther, didécyl éther, didodécyl éther, dodécyl octyl éther, dihexadécyl éther, (1,3-diméthyl butyl) tétradécyl éther, (1,3-diméthyl butyl) hexadécyl éther, le bis(1,3-diméthyl butyl) éther ou le dihexyl éther.
- Les mono-esters d'acides gras et d'alcools de formule (X) :

$$R''_1\text{-(C=O)-O-}R''_2 \qquad \text{(X)},$$

dans laquelle $R''_1$-(C=O) représente un radical acyle, saturé ou insaturé, linéaire ou ramifié, comportant de huit à vingt-quatre atomes de carbone, et $R''_2$ représente, indépendamment de $R''_1$, une chaîne hydrocarbonée saturée ou insaturée, linéaire ou ramifiée comportant de un à vingt-quatre atomes de carbone, par exemple les laurate de méthyle, laurate d'éthyle, laurate de propyle, laurate d'isopropyle, laurate de butyle, laurate de 2-butyle, laurate d'hexyle, cocoate de méthyle, cocoate d'éthyle, cocoate de propyle, cocoate d'isopropyle, cocoate de butyle, cocoate de 2-butyle, cocoate d'hexyle, myristate de méthyle, myristate d'éthyle, le myristate de propyle, le myristate d'isopropyle, le myristate de butyle, le myristate de 2-butyle, le myristate d'hexyle, le myristate d'octyle, le palmitate de méthyle, le palmitate d'éthyle, le palmitate de propyle, le palmitate d'isopropyle, le palmitate de butyle, le palmitate de 2-butyle, le palmitate d'hexyle, le palmitate d'octyle , l'oléate de méthyle, l' oléate d'éthyle, l'oléate de propyle,

l'oléate d'isopropyle, l'oléate de butyle, l'oléate de 2-butyle, l'oléate d'hexyle, l'oléate d'octyle, le stéarate de méthyle, le stéarate d'éthyle, le stéarate de propyle, le stéarate d'isopropyle, le stéarate de butyle, le stéarate de 2-butyle, le stéarate d'hexyle, le stéarate d'octyle, l'isostéarate de méthyle, l'isostéarate d'éthyle, l'isostéarate de propyle, l'isostéarate d'isopropyle, l'isostéarate de butyle, l'isostéarate de 2-butyle, l'isostéarate d'hexyle, l'isostéarate d'isostéaryle ;

- Les di-esters d'acides gras et de glycérol de formule (XI) et de formule (XII) :

$$R''_3\text{-(C=O)-O-CH}_2\text{-CH(OH)-CH}_2\text{-O-(C=O)-}R''_4 \quad \text{(XI)}$$

$$R''_5\text{-(C=O)-O-CH}_2\text{-CH[O-(C=O)-}R''_6\text{]-CH}_2\text{-OH} \quad \text{(XII),}$$

formules (XI) (XII) dans lesquelles $R''_3$-(C=O) et $R''_4$-(C=O), $R''_5$-(C=O), $R''_6$-(C=O), identiques ou différents, représentent un groupement acyle, saturé ou insaturé, linéaire ou ramifié, comportant de huit à vingt-quatre atomes de carbone.

- Les tri-esters d'acides gras et de glycérol de formule (XIII) :

$$R''_7\text{-(C=O)-O-CH}_2\text{-CH[O-(C=O)-}R''_8\text{]-CH}_2\text{- O-(C=O)-}R''_9 \quad \text{(XII),}$$

dans laquelle $R''_7$-(C=O), $R''_8$-(C=O) et $R''_9$-(C=O), identiques ou différents, représentent un groupement acyle, saturé ou insaturé, linéaire ou ramifié, comportant de huit à vingt-quatre atomes de carbone.

Selon un autre aspect particulier de la présente invention, ladite huile (H) est choisie parmi :

- L'undécane, le tridécane, l'isododécane ou l'isohexadécane,
- Les mélanges d'alcanes et d'isoalcanes et de cycloalcanes commercialisés sous les noms Emogreen™L15, Emogreen™L19, Emosmart™L15, Emosmart™L19, Emosmart™V21, Isopar™L ou Isopar™M ;
- Les huiles blanches minérales commercialisées sous les noms Marcol™52, Marcol™82, Drakeol™6VR, Eolane™130 ou Eolane™150 ;
- L'hémisqualane, le squalane, le polyisobutène hydrogéné ou le polydécène hydrogéné ;
- Le dioctyl éther ou le didécyl éther ;
- Le myristate d'isopropyle, le palmitate d'hexyle, le palmitate d'octyle, l'isostéarate d'isostéaryle, l'octanoyl/décanoyl triglycéride, l'hexadécanoyl/octadécanoyl triglycéride, les triglycérides issus de l'huile de colza, de l'huile de tournesol, de l'huile de lin ou de l'huile de palme.

Dans la composition (E) objet de la présente invention, le système émulsionnant ($S_1$) de type eau-dans-huile est constitué soit d'un seul tensioactif émulsionnant soit d'un mélange de tensioactifs émulsionnants, à condition que ledit mélange ait une valeur de HLB suffisamment faible pour induire la formation d'émulsions de type eau-dans-huile. Comme tensioactif émulsionnant de type eau-dans-huile, on peut citer par exemple les esters d'anhydro hexitol et d'acides carboxyliques aliphatiques, linéaires ou ramifiés, saturés ou insaturés, comportant de 12 à 22 atomes de carbone éventuellement substitués avec un ou plusieurs groupes hydroxyles, et plus particulièrement les esters d'anhydro hexitol choisis parmi les anhydro-sorbitols et les anhydro-mannitols et d'acides carboxyliques aliphatiques, linéaires ou ramifiés, saturés ou insaturés, comportant de 12 à 22 atomes de carbone éventuellement substitués avec un ou plusieurs groupes hydroxyles.

Dans la composition (E) objet de la présente invention, le système émulsionnant ($S_1$) de type eau-dans-huile est plus particulièrement choisi parmi les éléments du groupe constitué par le laurate de sorbitan, par exemple celui commercialisé sous le nom Montane™20, le palmitate de sorbitan, par exemple celui commercialisé sous le nom Montane™40, le stéarate de sorbitan, par exemple celui commercialisé sous le nom Montane™60, l'oléate de sorbitan, par exemple celui commercialisé sous le nom Montane™80, le sesquioléate de sorbitan, par exemple celui commercialisé sous le nom Montane™85, le trioléate de sorbitan, par exemple celui commercialisé sous le nom Montane™83, l'isolaurate de sorbitan, l'isostéarate de sorbitan, par exemple celui commercialisé sous le nom Montane™70, le laurate de mannitan, l'oléate de mannitan, ou un mélange de ces esters ; les polyesters de poids moléculaire compris entre 1000 et 3000 et issus de la condensation entre un acide poly(isobutényl) succinique ou son anhydride, tels que l'HYPERMER™ 2296, ou le mélange commercialisé sous le nom de marque SIMALINE™IE 501 A, les polyhydroxystéarates de polyglycols de formule (XIV) :

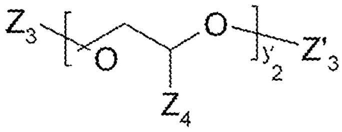

(XIV),

dans laquelle $y_2$ représente un nombre entier supérieur ou égal à 2 et inférieur ou égal à 50, $Z_4$ représente l'atome d'hydrogène, le radical méthyle, ou le radical éthyle, $Z_3$ représente un radical de formule (XV) :

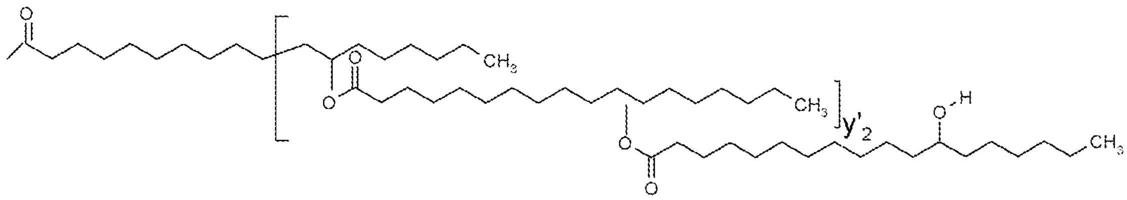

(XV),

dans laquelle $y'_2$ représente un nombre entier supérieur ou égal à 0 et inférieur ou égal à 10, plus particulièrement supérieur ou égal à 1 et inférieur ou égal à 10 et $Z'_2$ représente un radical de formule (XV) telle que définie ci-dessus, avec $Z_2$' identique ou différent de $Z_2$, ou l'atome d'hydrogène.

Comme exemples de tensioactif émulsionnant de type eau-dans-huile de formule (XIV) que l'on peut utiliser pour préparer le système émulsionnant ($S_1$), il y a le PEG-30 dipolyhydroxystéarate commercialisé sous le nom SIMALINE™ WO, ou bien les mélanges comprenant le PEG-30 dipolyhydroxystéarate et commercialisés sous les noms SIMALINE™IE 201 A et SIMALINE™IE 201 B, ou encore le mélange comprenant du Triméthylolpropane-30 tripolyhydroxystéarate commercialisé sous le nom SIMALINE™IE 301 B.

Selon un autre aspect particulier de la présente invention, ledit système émulsionnant ($S_2$) de type huile-dans-eau comprenant pour 100% de sa masse, au moins 75% en masse de ladite composition ($C_e$) telle que définie précédemment. Selon un aspect tout particulier ledit système émulsionnant ($S_2$) de type huile-dans-eau est la composition ($C_e$) telle que définie précédemment.

Par agent diluant de formule (I), on désigne dans la définition de ladite émulsion de type eau-dans-huile (E), objet de la présente invention, notamment, le glycérol, le diglycérol, le triglycérol ou l'hexaglycérol.

Selon un autre aspect particulier de la présente invention ledit agent diluant est caractérisé en ce que dans la formule (I), n représente un nombre entier supérieur ou égal à 1 et inférieur ou égal à 3. Selon un aspect tout particulier, n est égal à 1.

Selon un autre aspect particulier de la présente invention, ladite émulsion de type eau-dans-huile (E), telle que définie précédemment est caractérisée en ce que, dans les formules (III), (IV), (V), (VI), (VII) et (VIII), $G_{21}$, $G_{22}$, $G_{23}$, $G_{24}$, $G_{31}$ et $G_{32}$, identiques ou différents, représentent indépendamment l'un de l'autre le reste d'un sucre réducteur choisi parmi le glucose, le dextrose, le saccharose, le fructose, l'idose, le gulose, le galactose, le maltose, l'isomaltose, le maltotriose, le lactose, le cellobiose, le mannose, le ribose, le xylose, l'arabinose, le lyxose, l'allose, l'altrose, le dextrane et le tallose. Lesdits restes d'un sucre réducteur $G_{21}$, $G_{22}$, $G_{23}$, $G_{24}$, $G_{31}$ et $G_{32}$, identiques ou différents, sont plus particulièrement choisis parmi les restes du glucose, du xylose ou de l'arabinose.

Selon un aspect plus particulier de la présente invention, ladite émulsion de type eau-dans-huile (E) telle que définie précédemment est caractérisée en ce que dans les formules (III), (IV), (V) et (VI), lesdits restes d'un sucre réducteur $G_{21}$, $G_{22}$, $G_{23}$, $G_{24}$ sont identiques et représentent le reste du glucose, le reste du xylose ou le reste de l'arabinose et tout particulièrement le reste du glucose ou le reste du xylose.

Selon un aspect très particulier de la présente invention, ladite émulsion de type eau-dans-huile (E) telle que définie précédemment est caractérisée en ce que dans les formules (III), (IV), (V) et (VI), lesdits restes d'un sucre réducteur $G_{21}$, $G_{22}$, $G_{23}$, $G_{24}$ sont identiques et représentent le reste du glucose.

Selon un autre aspect particulier de la présente invention, ladite émulsion de type eau-dans-huile (E) telle que définie précédemment est caractérisée en ce que dans les formules (III), (IV), (V) et (VI), r, s, t et u respectivement, représentent indépendamment l'un de l'autre un nombre décimal supérieur ou égal à 1,05 et inférieur ou égal à 2,5 ; ce nombre décimal est dans ce cas souvent inférieur ou égal à 2,0, et par exemple supérieur ou égal à 1,25 et inférieur ou égal à 2,0.

Selon un autre aspect plus particulier de la présente invention, ladite émulsion de type eau-dans-huile (E) telle que définie précédemment est caractérisée en ce que dans les formules (VII) et (VIII), lesdits restes d'un sucre réducteur $G_{31}$ et $G_{32}$ représentent un même reste de sucre réducteur choisi parmi le reste du glucose, le reste du xylose et le

reste de l'arabinose, et tout particulièrement représentent le reste du glucose, ou le reste du xylose.

Selon un aspect très particulier de la présente invention, ladite émulsion de type eau-dans-huile (E) telle que définie précédemment est caractérisée en ce que dans les formules (VII) et (VIII), lesdits restes d'un sucre réducteur $G_{31}$ et $G_{32}$ sont identiques et représentent le reste du glucose.

Selon un autre aspect plus particulier de la présente invention, ladite émulsion de type eau-dans-huile (E) telle que définie précédemment est caractérisée en ce que dans les formules (VII) et (VIII), x et y respectivement, représentent un nombre décimal supérieur ou égal à 1,05 et inférieur ou égal à 2,5 ; ce nombre décimal est dans ce cas souvent inférieur ou égal à 2,0, et par exemple supérieur ou égal à 1,25 et inférieur ou égal à 2,0.

Selon un autre aspect particulier de la présente invention, ladite émulsion de type eau-dans-huile (E) telle que définie précédemment, est caractérisée en ce que le ratio massique :

$$\Delta = \text{masse de la composition } (C_{2\beta 2}) / \text{masse de la composition } (C_{2\beta 3}),$$

est supérieur ou égal à 1 et inférieur ou égal à 10, plus particulièrement supérieur ou égal à 1,0 et inférieur ou égal à 8,0, tout particulièrement supérieur ou égal à 1,5 et inférieur ou égal à 7,0, par exemple supérieur ou égal à 2,0 et inférieur ou égal à 7,0.

Ladite émulsion de type eau-dans-huile (E) objet de la présente invention, est préparée par la mise en œuvre d'un procédé dit de « polymérisation en émulsion inverse », bien connu de l'homme du métier, et qui comprend les étapes suivantes :

- une étape a) de préparation d'une phase aqueuse comprenant de l'eau, les monomères hydrosolubles et optionnellement le monomère de réticulation (AR), ainsi que des additifs couramment utilisés comme par exemple des agents séquestrants comme l'Ethylène Diamine Tétra Acétique sous sa forme sodique, ou le sel de pentasodium de l'acide penta acétique du diéthylènetramine (commercialisé sous le nom de marque Versenex™80)
- une étape b) de mélange de la phase huileuse (H) avec le système émulsionnant de type eau-dans-huile ($S_1$) ;
- une étape c) de mélange de la phase aqueuse et de la phase huileuse, préparées lors des précédentes étapes, et d'émulsification à l'aide d'un mobile de type rotor-stator ;
- une étape d) d'inertage à l'azote ;
- une étape e) d'amorçage de la réaction de polymérisation par introduction dans l'émulsion formée en c), d'un initiateur de radicaux libres et d'éventuellement un co-initiateur ; puis on la laisse se dérouler,
- une étape f) d'introduction du système émulsionnant ($S_2$) de type huile-dans-eau tel que défini précédemment à une température inférieure à 50 C.

Selon un aspect particulier du procédé tel que défini précédemment, la réaction de polymérisation de l'étape e) est amorcée par un couple oxydoréducteur générateur d'ions hydrogénosulfite ($HSO_3^-$), tel que le couple hydroperoxyde de cumène-métabisulfite de sodium ($Na_2S_2O_5$) ou le couple hydroperoxyde de cumène-chlorure de thionyle ($SOCl_2$) à une température inférieure ou égale à 10° C, si désiré accompagné d'un agent co-initiateur de polymérisation tel que par exemple l'azo-bis(isobutyronitrile) puis conduite soit de manière quasi adiabatique jusqu'à une température supérieure ou égale à 50° C, soit en contrôlant la température.

Selon un autre aspect particulier du procédé tel que défini précédemment, le milieu réactionnel issu de l'étape e), est concentré par distillation, avant la mise en œuvre de l'étape f).

Selon un autre aspect particulier du procédé tel que défini précédemment, le milieu réactionnel issu de l'étape e) ou de l'étape f) est atomisé dans une installation adaptée. Selon un autre aspect particulier du procédé tel que défini précédemment, la phase aqueuse préparée à l'étape a) peut comprendre des agents réducteurs de chaîne, destinés à réduire la longueur des chaînes polymériques formées et à augmenter le taux de branchement sur le polymère, de façon à modifier les propriétés rhéologiques.

Parmi les agents réducteurs de chaîne adaptés au procédé tel que défini précédemment, on peut citer le méthanol, l'isopropanol, le butylène glycol, le 2-mercapto éthanol, l'acide thioglycolique, l'acide formique ou ses sels.

La composition ($C_e$) comprise dans le système émulsionnant ($S_2$) de type huile-dans-eau est préparée selon un procédé comprenant les étapes suivantes :

- Une étape A) de réaction, dans les proportions souhaitées, d'un sucre réducteur de formule (XVI) ou un mélange de sucres réducteurs de formule (XVI) :

  HO-(G)-H (XVI)

  dans laquelle G représente le reste d'un sucre réducteur, avec un excès molaire d'un mélange d'alcools de formule

(II) :

$$C_mH_{2m+1}\text{-OH} \qquad (II),$$

telle que définie précédemment, pour former un mélange de composés de formule (III), (IV), (V), (VI), (VII) et (VIII) tels que définis précédemment et un excès dudit mélange d'alcools de formule (II) ;

- Une étape B) d'élimination partielle de l'excès dudit mélange d'alcools de formule (II) pour former ladite composition ($C_{e2}$) telle que définie précédemment ;
- Une étape C) de mélange de ladite composition ($C_{e2}$), avec au moins un agent diluant tel que défini précédemment ;

L'étape A) est généralement mise en œuvre dans un réacteur en présence d'un système catalytique acide, en maîtrisant le rapport stœchiométrique entre les deux réactants, et plus particulièrement en introduisant un excès molaire du mélange d'alcools de formule (II), sous agitation mécanique dans des conditions de température et de vide partiel prédéterminées, par exemple à une température comprise entre 70°C et 130°C et sous un vide partiel compris entre 300 mbar (3.104 Pa) et 20 mbar (2.103 Pa). Par système catalytique acide, on désigne les acides forts comme l'acide sulfurique, l'acide chlorhydrique, l'acide phosphorique, l'acide nitrique, l'acide hypophosphoreux, l'acide méthanesulfonique, l'acide para-toluène sulfonique, l'acide trifluorométhanesulfonique, ou les résines échangeuses d'ions.

Le procédé tel que défini ci-dessus peut comprendre en outre des opérations de neutralisation, de filtration et de décoloration.

L'invention a aussi pour objet l'utilisation de ladite émulsion de type eau-dans-huile (E) telle que définie précédemment, comme agent épaississant et/ou émulsionnant et/ou stabilisant d'une composition aqueuse liquide détergente à usage ménager ou industriel. b

Par «compositions aqueuses liquides détergentes à usage ménager ou industriel », on entend au sens de la présente invention des compositions liquides à 20°C, conçues et utilisées pour le nettoyage de différents types de surfaces, comme par exemple les fibres textiles, les surfaces dures de différentes natures comme par exemple le verre, la céramique, les carrelages, le bois, le métal, les matériaux composites.

Ces « compositions aqueuses liquides détergentes à usage ménager ou industriel » trouvent leurs applications pour nettoyer lesdites surface de salissures, comme par exemple le nettoyage de la vaisselle manuellement ou par l'intermédiaire d'une machine lave-vaisselle, des bouteilles, du linge manuellement ou par l'intermédiaire d'une machine lave-linge, des sols, des surfaces métalliques souillées par des graisses, les vitres, les toilettes, les cuves de stockage.

Parmi ces compositions aqueuses liquides détergentes à usage ménager ou industriel destinées à la détergence de surfaces dures pour des applications ménagères ou industrielles, on peut distinguer les compositions nettoyantes aqueuses alcalines et les compositions nettoyantes aqueuses acides. De telles compositions aqueuses liquides détergentes à usage ménager ou industriel peuvent se présenter sous la forme d'une solution, d'un gel, d'une émulsion de type huile-dans-eau ou de type eau-dans-huile, sous la forme d'une dispersion.

Selon un aspect particulier, ladite utilisation consiste à épaissir des phases polaires comme par exemple des phases constituées d'eau, d'alcools comprenant d'un à six atomes de carbone, de polyols tels que le glycérol, ou de leurs mélanges.

Selon un autre aspect particulier, ladite utilisation consiste à stabiliser une émulsion de type huile-dans-eau, ou de type eau-dans-huile, en conférant un aspect homogène à ladite émulsion pendant le stockage dans différentes conditions, et plus particulièrement à 25°C pendant une durée au moins égale à un mois, et plus particulièrement à 4°C pendant une durée au moins égale à un mois, et plus particulièrement à 45°C pendant une durée au moins égale à un mois.

Selon un autre aspect particulier, ladite utilisation consiste à stabiliser des particules solides dans des compositions aqueuses liquides détergentes à usage ménager ou industriel.

Ces particules solides à suspendre peuvent revêtir différentes géométries, régulières ou irrégulières, et se présenter sous forme de perles, de billes, de tiges, de paillettes, de lamelles ou de polyèdres. Ces particules solides se caractérisent par un diamètre moyen apparent compris entre un micromètre et cinq millimètres, plus particulièrement entre dix micromètres et un millimètre. Parmi les particules solides qui peuvent être mises en suspension et stabilisées grâce à ladite émulsion de type eau-dans-huile (E) telle que définie précédemment dans des compositions aqueuses liquides détergentes à usage ménager ou industriel, on peut citer des microparticules minérales améliorant les propriétés nettoyantes, comprises, pour 100% massique de ladite composition aqueuse liquide détergente à usage ménager ou industriel, entre 0,2 % et 20% massique.

Parmi ces particules solides qui peuvent être mises en suspension et stabilisées grâce à ladite émulsion de type eau-dans-huile (E) telle que définie précédemment dans des compositions aqueuses liquides détergentes à usage ménager ou industriel, on peut citer les particules solides inorganiques telles que la silice, le dioxyde de titane, les micas, les oxydes de fer, l'oxyde de zinc, l'oxyde d'aluminium, le talc, le kaolin, les argiles, le nitrure de bore, le carbonate de calcium, le carbonate de magnésium, l'hydrogénocarbonate de magnésium, les pigments colorés inorganiques, les particules solides organiques comme certains polymères les polyamides comme le nylon-6, les polyéthylènes, les

polypropylènes, les polystyrènes, les polyesters, les polymères acryliques ou méthacryliques comme les polyméthylméthacrylates, le polytétrafluoroéthylène, les cires cristallines ou microcristallines, des sphères poreuses, des capsules enfermant des additifs comme un parfum, un savon, un adoucissant pour le linge, lesdites particules ayant généralement une taille micro- particulaire ou nano-particulaire.

L'invention a également pour objet une composition (F) à usage ménager ou industriel comprenant pour 100% de sa masse totale entre 0,1 % et 10 % massique de la composition (E) telle que définie ci-dessus.
L'expression " une composition (F) à usage ménager ou industriel " revêt le même sens tel que défini ci-dessus.

La composition (F) à usage ménager ou industriel objet de la présente invention se présente notamment sous la forme d'une solution aqueuse, d'une émulsion ou d'une microémulsion à phase continue aqueuse, d'une émulsion ou d'une microémulsion à phase continue huileuse, d'un gel aqueux, d'une mousse, ou encore sous la forme d'un aérosol.

La composition (F) à usage ménager ou industriel objet de la présente invention peut être appliquée directement par trempage, par aspersion ou par vaporisation sur la surface à nettoyer ou bien par l'intermédiaire de tout type de support destiné à être mis en contact avec la surface dure à nettoyer (papier, lingette, textile) comprenant ladite composition (F).

De façon générale la composition (F) à usage ménager ou industriel objet de la présente invention, comporte également des ingrédients habituellement mis en œuvre dans le domaine du nettoyage de surfaces dures ou de fibres textiles, comme des tensioactifs non-ioniques, des agents tensioactifs cationiques, des tensioactifs amphotères, des polymères cationiques, des polymères non-ioniques, des agents épaississants, des enzymes, des agents de blanchiment, des agents anticorrosion, des solvants, des agents acides, des agents alcalins, des agents anticalcaire, des agents conservateurs, des parfums, des colorants, des agents répulsifs, des agents oxydants, des adjuvants de détergence, des agents antisalissure, les agents antiredéposition.

Parmi les acides minéraux particulièrement choisis comme agents acides dans la composition (F) à usage ménager ou industriel objet de la présente invention, on peut citer l'acide chlorhydrique, l'acide nitrique, l'acide phosphorique, l'acide sulfurique, l'acide hypophosphoreux, l'acide phosphoreux, l'acide hypochloreux, l'acide perchlorique, l'acide carbonique, l'acide borique, l'acide manganique, l'acide permanganique, l'acide chromique, l'acide périodique, l'acide iodique, l'acide hypoiodeux, l'acide bromohydrique, l'acide iodhydrique, l'acide fluorhydrique.

Parmi les acides organiques particulièrement choisis comme agents acides dans la composition (F) à usage ménager ou industriel objet de la présente invention, on peut citer l'acide formique, l'acide acétique, l'acide propionique, l'acide benzoïque, l'acide salicylique, l'acide oxalique, l'acide malonique, l'acide succinique, l'acide glutarique, l'acide adipique, l'acide glycolique, l'acide lactique, l'acide malique, l'acide maléique, l'acide tartrique, l'acide citrique, l'acide sorbique, l'acide sulfamique, l'acide dihydroacétique, l'acide diméthylsulfamique, l'acide fumarique, l'acide glutamique, l'acide isopropyl sulfamique, l'acide valérique, l'acide benzène sulfonique, l'acide xylène sulfonique, l'acide 2-éthylhexanoïque, l'acide caprique, l'acide caproïque, l'acide crésylique, l'acide dodécylbenzène sulfonique, l'acide peracétique, l'acide monochloroacétique, l'acide gluconique.

Parmi les agents alcalins associés à la composition (F) à usage ménager ou industriel objet de la présente invention, on peut citer les éléments du groupe constitué par les hydroxydes de métaux alcalins ou alcalino-terreux comme par exemple l'hydroxyde de sodium, l'hydroxyde de potassium, l'hydroxyde de barium et l'hydroxyde de calcium.

Parmi les agents anti-calcaires associés à la compsoiton (F) à usage ménager ou industriel objet de la présente invention, on peut citer les éléments du groupe constitué par les agents séquestrants, comme par exemple le tripolyphospate de sodium (TPP), l'éthylènediaminetétracétate (EDTA), le tetraacetyléthylènediamine (TAED), le méthyl glycine diacétate (MGDA), le nitrolotriacétate de sodium ($Na_3NTA$), les gluconates de sodium ou de potassium, les érythorbates de sodium ou de potassium, les polycarboxylates de sodium ou de potassium, et le citrate de sodium, par les agents échangeurs d'ions comme par exemple les zéolithes ou aluminosilicates de sodium, ou les silicates de sodium lamellaires, les agents précipitants comme par exemple le carbonate de calcium et le métasilicate de sodium.

Les agents séquestrants, et plus particulièrement les agents séquestrants décrits ci-dessus, ont pour effet de complexer les ions calcium et magnésium pour former des complexes hydrosolubles ensuite éliminés pendant le rinçage.

Les agents échangeurs d'ions, et plus particulièrement les agents échangeurs d'ions décrits ci-dessus, ont pour effet d'échanger leurs ions sodium avec des ions calcium et magnésium.

Les agents précipitants, et plus particulièrement les agents séquestrants décrits ci-dessus, ont pour effet d'éliminer les ions responsables de la dureté de l'eau en formant des composés de calcium insolubles, éliminé par la suite avec les salissures sur les surfaces nettoyées.

Selon un aspect plus particulier, dans la composition (F) à usage ménager ou industriel objet de la présente invention, l'agent anticalcaire est choisi parmi les éléments du groupe constitué du métasilicate de sodium, du tripolyphospate de sodium (TPP), de l'éthylènediaminetétracétate (EDTA), du tetraacetyléthylènediamine (TAED), du méthyl glycine diacétate (MGDA), du nitrolotriacétate de sodium ($Na_3NTA$), du gluconate de sodium, du citrate de sodium et du carbonate de calcium.

Parmi les tensioactifs non-ioniques que l'on peut associer à la composition (F) à usage ménager ou industriel objet de la présente invention, on peut citer :

- Des copolymères blocs d'oxyde d'éthylène et d'oxyde de propylène, et tout particulièrement les copolymères blocs d'oxyde d'éthylène et d'oxyde de propylène commercialisés sous le nom de marque PLURONIC™ par la société BASF, comme par exemple le PLURONIC™PE 6100 et le PLURONIC™PE 6200 ,
- Des tensioactifs non ioniques démoussant de formule ($A_1$) :

$$R_1\text{-X-[(}CH_2\text{-}CH(CH_3)\text{-O)u'-(}CH_2\text{-}CH_2\text{-O)v'-Y]w'} \quad (A_1)$$

dans laquelle :

  - $R_1$ représente un radical aliphatique hydrocarboné, saturé ou insaturé, linéaire ou ramifié, comportant de 6 à 18 atomes de carbone,
  - X représente un atome d'azote ou un atome d'oxygène,
  - v' représente un nombre entier compris entre 1 et 50,
  - u' représente un nombre entier compris entre 1 et 50,
  - w' représente un nombre entier égal à 1 si X représente un atome d'oxygène, et w' représente un nombre entier égal à 1 ou 2 si X représente un atome d'azote.
  - Y représente un groupe fonctionnel bloquant choisi parmi les éléments du groupe constitué par les radicaux alkyles linéaires comportant de 4 à 8 atomes de carbone, comme par exemple le radical butyle, le radical benzyle, un groupe oxyde de butylène.

  Parmi les tensioactifs non ioniques démoussants de formule ($A_1$), on peut citer les produits commercialisés sous le nom de marque TERGITOL™ par la société DOW CHEMICAL comme par exemple le TERGITOL™ L61E et le TERGITOL™ L64E
  - Des tensioactifs non ioniques peu moussant de formule ($A_2$) :

$$R_8\text{-O-(S')}_{q'}\text{-H} \quad (A_2)$$

  dans laquelle :

    - S' représente le reste d'un sucre réducteur choisis parmi les éléments du groupe constitué par le glucose, le xylose et l'arabinose,
    - $R_8$ représente un radical hydrocarboné saturé, linéaire ou ramifié, comportant de 6 à 10 atomes de carbone
    - q' représente un nombre décimal supérieur ou égal à 1,05 et inférieur ou égal à 5.

Comme exemple de tensioactifs non ioniques peu moussants de formule ($A_2$) présents dans la composition (F) à usage ménager ou industriel objet de la présente invention, on peut citer les hexylpolyglucosides, les 2-éthyl hexyl polyglucosides, les n-heptyl polyglucosides, les n-octyl polyglucosides.

Parmi les tensioactifs amphotères moussants et/ou détergents que l'on peut associer à la composition (F) à usage ménager ou industriel objet de la présente invention, on peut citer les alkylbétaïnes, les alkylamidobétaïnes, les sultaïnes, les alkylamidoalkylsulfobétaïnes, les dérivés d'imidazolines, les phosphobétaïnes, les amphopolyacétates, les amphopropionates, le β alanine, N-(2-carboxyethyl)-N-(2-ethylhexyl) de sodium commercialisé sous le nom de marque TOMAMINE® AMPHOTERIC 400 SURFACTANT.

Parmi les tensioactifs anioniques moussants et/ou détergents que l'on peut associer à la composition (F) à usage ménager ou industriel objet de la présente invention, on peut citer les sels de métaux alcalins, de métaux alcalino-terreux, d'ammonium, d'amines, ou d'aminoalcools d'alkylether sulfates, d'alkyl sulfates, d'alkylamidoéther sulfates, d'alkylaryl polyéthersulfates, de monoglycérides sulfates, d'alpha-oléfinesulfonates, de paraffines sulfonates, d'alkyl phosphates, d'alkyléther phosphates, d'alkyl sulfonates, d'alkylamide sulfonates, d'alkylaryl sulfonates, d'alkyl carboxylates, d'alkyl sulfosuccinates, d'alkyléther sulfosuccinates, d'alkylamide sulfosuccinates, d'alkyl sulfoacétates, d'alkyl sarcosinates, d'acyl iséthionates, de N-acyl taurates, d'acyl lactylates, de dérivés N-acylés d'acides aminés, de dérivés N-acylés de peptides, de dérivés N-acylés de protéines, de dérivés N-acylés d'acides gras.

Parmi les tensioactifs non ioniques que l'on peut associer à la composition (F) à usage ménager ou industriel objet de la présente invention, on peut citer les monoglycérides alcoxylés, les diglycérides alcoxylés, les hydrocarbures terpéniques alcoxylés tels que les α- ou β-pinènes éthoxylés et/ou propoxylés, contenant de 1 à 30 motifs oxyéthylène et/ou oxypropylène, les produits résultant de la condensation de l'oxyde d'éthylène ou de l'oxyde de propylène avec l'éthylènediamine, tels les TETRONIC™ commercialisés par BASF, les acides gras éthoxylés et/ou propoxylés en C8-C18 contenant de 5 à 25 moles d'oxyde d'éthylène et/ou de propylène, les amides gras éthoxylés contenant de 5 à 30 moles d'oxyde d'éthylène, les aminés éthoxylées contenant de 5 à 30 moles d'oxyde d'éthylène, les amidoamines alcoxylées contenant de 1 à 50, de préférence de I à 25, tout particulièrement de 2 à 20 moles d'oxyde d'éthylène et/ou de propylène.

Parmi les agents épaississants et/ou gélifiants que l'on peut associer à la composition (F) à usage ménager ou industriel objet de la présente invention, on peut citer les polysaccharides constitués uniquement d'osés, comme les glucanes ou homopolymères du glucose, les glucomannoglucanes, les xyloglycanes, les galactomannanes dont le degré de substitution (DS) des unités de D-galactose sur la chaîne principale de D-mannose est compris entre 0 et 1, et plus particulièrement entre 1 et 0,25, comme les galactomannanes provenant de la gomme de cassia (DS = 1/5), de la gomme de caroube (DS = 1/4), de la gomme de tara (DS = 1/3), de la gomme de guar (DS = 1/2), de la gomme de fenugrec (DS = 1 ).

Parmi les agents épaississants et/ou gélifiants que l'on peut associer à la composition (F) à usage ménager ou industriel objet de la présente invention, on peut citer les polysaccharides constitués de dérivés d'oses, comme les galactanes sulfatés et plus particulièrement les carraghénanes et l'agar, les uronanes et plus particulièrement les algines, les alginates et les pectines, les hétéropolymères d'oses et d'acides uroniques et plus particulièrement la gomme xanthane, la gomme gellane, les exsudats de gomme de arabique et de gomme de karaya, les glucosaminoglycanes.

Parmi les agents épaississants et/ou gélifiants que l'on peut associer à la composition (F) à usage ménager ou industriel objet de la présente invention, on peut citer la cellulose, les dérivés de cellulose comme la méthyl-cellulose, l'éthyl-cellulose, l'hydroxypropyl cellulose, les silicates, l'amidon, les dérivés hydrophiles de l'amidon, les polyuréthanes.

Parmi les agents épaississants et/ou gélifiants que l'on peut associer à la composition (F) à usage ménager ou industriel objet de la présente invention, on peut citer les agents épaississants inorganiques comme par exemple les argiles, l'hectorite, la saponite, la sauconite, la vermiculite ou la silice colloïdale.

Les agents épaississants présents dans la composition (F) objet de la présente invention sont utilisés dans des quantités comprises entre 0,1% et 10% massique.

Parmi les agents abrasifs que l'on peut associer à la composition (F) à usage ménager ou industriel objet de la présente invention, on peut citer des matériaux d'origine naturelle comme par exemple des copeaux de bois ou de noyaux, des matériaux abrasifs inorganiques tels que des oxydes, des quartzs, des terres diatomées, des dioxydes de silice colloïdales, des matériaux abrasifs organiques tels que des polyoléfines comme les polyéthylènes et les polypropylènes, des polystyrènes, des résines d'acétonitrile-butadiène-styrène, des mélamines, des résines phénoliques, des résines époxy, des résines polyuréthanes.

Les agents abrasifs présents dans la composition (F) objet de la présente invention sont utilisés dans des quantités comprises entre 5,0% et 30% massique. Parmi les solvants que l'on peut associer à la composition (F) à usage ménager ou industriel objet de la présente invention, on peut citer l'alcool isopropylique, l'alcool benzylique, le 1,3 propane diol, les solvants chlorés, l'acétone, le méthyl éthyl éther, le méthyl isobutyl éther, l'acétate de butyle, l'acétate d'éthyle, l'acétate d'isopropyle, l'acétate d'isobutyle, les solvants aromatiques, les isoparaffines, l'isododécane, le lactate d'éthyle, le lactate de butyle, les solvants terpéniques, les esters méthyliques de colza, les esters méthyliques de tournesol, le propylène glycol n-méthyl éther, le dipropylène glycol n-méthyl éther, le tripropylène glycol n-méthyl éther, le propylène glycol n-butyl éther, le dipropylène glycol n-butyl éther, le tripropylène glycol n-butyl éther, le propylène glycol n-propyl éther, le dipropylène glycol n-propyl éther, le propylène glycol mono méthyl éther acétate, le propylène glycol di acétate, le propylène glycol phényl éther, l'éthylène glycol phényl éther, le dipropylène glycol diméthyl éther.

Comme exemples de solvants présents dans la composition (F) objet de la présente invention, on peut citer plus particulièrement les éléments du groupe constitué par le propylène glycol n-méthyl éther, le dipropylène glycol n-méthyl éther, le tripropylène glycol n-méthyl éther, le propylène glycol n-butyl éther, le dipropylène glycol n-butyl éther, le tripropylène glycol n-butyl éther, le propylène glycol n-propyl éther, le dipropylène glycol n-propyl éther, le propylène glycol phényl éther, l'éthylène glycol phényl éther, le dipropylène glycol diméthyl éther, les esters méthyliques de colza, les esters méthyliques de tournesol.

Parmi les enzymes que l'on peut associer à la composition (F) à usage ménager ou industriel objet de la présente invention, on peut citer les protéases, les amylases, les lipases, les cellulases et les peroxydases.

Les enzymes présentes dans la composition (F) objet de la présente invention sont utilisés dans des quantités comprises entre 0,005 % et 0,5 % massique.

Selon un autre aspect, l'invention a pour objet l'utilisation d'une composition (F) à usage ménager ou industriel telle que définie ci-dessus pour nettoyer les surfaces dures.

L'expression « pour nettoyer les surfaces dures » désigne toute action destinée à permettre l'élimination de salissures présentes sur des surfaces constituées de matériaux divers. Les surfaces à nettoyer peuvent être des surfaces dures ou des surfaces textiles. Par surfaces dures, on désigne par exemple les sols, les murs, les carreaux de fenêtres, les carrelages, les appareils électro-ménagers, la vaisselle, les plans de travail, la robinetterie, les éviers, des cuves de stockage de produits chimiques, alimentaires ou agricoles, les véhicules (automobiles, moto, camions, ...).

Les matériaux constituant ces surfaces dures sont par exemple le verre (sodocalcique, fluorocalcique, borosilicate, cristal), la porcelaine, la faïence, la céramique, les plastiques polycarbonates, polypropylènes, l'acier inoxydable, l'argent, le cuivre, l'aluminium, le bois, les résines synthétiques, la vitrocéramique, le linoleum, et peuvent être revêtus de peintures, de vernis.

Comme exemple de salissures présentes sur ces surfaces dures et à éliminer par nettoyage, on peut citer par exemple des résidus alimentaires, des graisses, des hydrocarbures lourds et légers, des résidus brûlés, de la poussière,

de la boue, des traces de doigts, des résidus de savon, des germes.

Selon un autre aspect, l'invention a pour objet un procédé de nettoyage d'une surface dure comprenant au moins une étape a"$_1$) d'application de la composition (F) à usage ménager ou industriel telle que définie ci-dessus sur ladite surface dure, suivie d'au moins une étape b"$_1$) de rinçage de ladite surface dure.

Dans l'étape a"$_1$) du procédé de nettoyage objet de l'invention, la composition (F) à usage ménager ou industriel est appliquée sur la surface comprenant les salissures à nettoyer par tout moyen comme par exemple en plein bain, par aspersion, par application par l'intermédiaire d'un support constitué de_fibres textiles synthétiques ou naturelles, tissées ou non tissées, ou de papier, préalablement imprégné de ladite composition (F) à usage ménager ou industriel.

Dans l'étape b"$_1$) du procédé de nettoyage objet de l'invention, le rinçage de la surface dure sur laquelle a été appliquée la composition (F) à usage ménager ou industriel lors de l'étape a"$_1$) est réalisé en plein bain ou par aspersion d'eau,.

L'étape b"$_1$) du procédé de nettoyage objet de l'invention, peut être réalisée à température ambiante ou à une température comprise entre 30°C et 80°C, plus particulièrement à une température comprise entre 30°C et 65°C.

Les exemples suivants illustrent l'invention, sans toutefois la limiter.

**$I_A$ - Préparation d'une composition ($C_{e2A}$) à base d'alkylpolyglucosides et de glycérol.**

On prépare 72,5 kilogrammes (soit 8,5 équivalents molaires) d'un mélange ($M_1$) comportant pour 100% de sa masse, 30,2% en masse de 1-octanol, 38,4% en masse de 1-décanol, 7,4% en masse de 1-dodécanol, 8,9% en masse de 1-tétradécanol, 5,1% en mase de 1-hexadécanol et 10,0% en masse de 1-octadécanol en introduisant sous agitation et à 90°C, successivement chacun des alcools gras précités dans des proportions souhaitées.

Le mélange ($M_1$) est homogénéisé à 90°C pendant trente minutes, puis additionné de 8,7 kilogrammes (soit un équivalent molaire) de glucose, puis de 80 grammes d'acide sulfurique à 98%. Le milieu réactionnel est alors mis sous un vide partiel de $90\times10^2$ Pa (90mbar) à $45\times10^2$ Pa (45mbar), et maintenu à une température de 100°C à 105°C pendant cinq heures avec évacuation de l'eau formée. Le milieu réactionnel est ensuite refroidi à 80°C et neutralisé par ajout de 76 grammes de soude à 40%. Le produit est filtré pour éliminer le glucose non réagi. On obtient 72,0 kilogrammes d'un milieu comprenant les espèces glucosidiques formées ainsi que les alcools gras en excès stœchiométrique n'ayant pas réagi. Les alcools résiduels présents dans le mélange ainsi obtenu sont ensuite éliminés par passage dans un évaporateur sur film à couche mince.

36,6 kilogrammes du milieu réactionnel ainsi neutralisé sont alors introduits dans un évaporateur à film à couche mince, sous une pression réduite de $3\times10^2$Pa (3mbar) à 5x10 Pa (5mbar) avec une température de paroi de 240°C, pour distiller la majeure partie des alcools résiduels et obtenir 4,5 kilogrammes d'un concentré, auquel 4,5 kilogrammes de glycérol sont ajoutés progressivement sous agitation, de façon à obtenir 9,0 kilogrammes de la composition ($C_{e2a}$) attendue.

**$I_B$ - Préparation d'une composition ($C_{e2B}$) à base d'alkylpolyglucosides et de diglycérol**

Le mode opératoire de l'exemple 1 décrit ci-dessus est reproduit en remplaçant le glycérol par du diglycérol, dans des proportions massiques telles qu'elles permettent d'obtenir la composition ($C_{e2B}$), comprenant pour 100 % de sa masse, 50% massique de diglycérol.

**$I_c$ - Préparation d'une composition ($C_{e2C}$) à base d'alkylpolyglucosides et de polyglycérol-6**

Le mode opératoire de l'exemple 1 décrit ci-dessus est reproduit en remplaçant le glycérol par du polyglycérol-6 (commercialisé sous le nom de marque Polyglycerol6™ de la société SPIGA), dans des proportions massiques telles qu'elles permettent d'obtenir la composition ($C_{e2C}$), comprenant pour 100 % de sa masse, 50% massique de polyglycérol-6.

**$I_T$ - Préparation d'une composition ($C_{e2T}$) à base d'alkylpolyglucosides et de 1,3-propanediol**

Le mode opératoire de l'exemple 1 décrit ci-dessus est reproduit en remplaçant le glycérol par du 1,3-propanediol (commercialisé sous le nom de marque Zemea™propanediol de la société Dupont-Tate & Lyle), dans des proportions massiques telles qu'elles permettent d'obtenir la composition ($C_{e2T}$) comprenant pour 100% de sa masse, 22% massique de 1,3-propanediol.

**II - Préparation et évaluation de latex inverses auto-inversibles d'un copolymère réticulé du sel de sodium de l'acide 2-méthyl-[(1-oxo-2-propènyl) amino] 1-propanesulfonique et de l'acide acrylique partiellement salifié.**

On prépare une phase aqueuse en versant successivement dans un bécher et sous agitation, 277 grammes d'eau permutée, 73,1 grammes d'acide acrylique glacial, 308 grammes d'acide 2-méthyl-[(1-oxo-2-propenyl) amino] 1-propanesulfonique, 141 grammes d'une solution aqueuse à 48% en masse d'hydroxyde de sodium, 0,45 gramme d'une solution aqueuse commerciale à 40% en masse de diéthylènetriamine penta-acétate de sodium et 0,128 gramme de méthylène bis(acrylamide). Le pH de cette phase aqueuse est ensuite ajusté à 5,4 et la solution complétée avec de l'eau permutée jusqu'à peser 682 grammes.

On prépare indépendamment une phase organique en mélangeant 220 grammes d'isohexadécane, 15 grammes de Montane™ 80, 10 grammes de Montane™ 70 et 0,2 gramme d'azo bis(isobutyronitryle) (AIBN).

La phase aqueuse préparée est ensuite ajoutée progressivement sur la phase huileuse puis dispersée à l'aide d'un rotor stator type Ultra Turrax commercialisé par la société Ika.

L'émulsion obtenue est transférée dans un réacteur pour être soumise à un barbotage d'azote pour éliminer l'oxygène et refroidie à environ 5-6 °C. 5 $cm^3$ d'une solution à 0,42% en masse d'hydroperoxyde de cumène dans l'isohexadécane sont ajoutés à l'émulsion maintenue sous agitation, puis une solution aqueuse à 2,5% en masse de métabisulfite de sodium est introduite progressivement à un débit de 0,5 $cm^3$ par minute pendant soixante minutes pour initier la réaction de polymérisation. La température du milieu augmente jusqu'à atteindre un palier. Le milieu réactionnel est ensuite chauffé à 85°C pendant une heure puis l'ensemble est refroidi jusqu'à environ 35°C pour obtenir le mélange noté ($M_2$).

Le mélange ($M_2$) précédemment obtenu est fractionné en différentes portions auxquelles sont ajoutées les différentes compositions tensioactives (($C_{e2A}$)), ($C_{e2B}$), ($C_{e2C}$) et ($C_{e2T}$), telles que décrites ci-dessus, ainsi que du Polysorbate 80 (78% en masse de matière active) commercialisé sous le nom de marque Montanox™80 ($S_2$), et une solution aqueuse de capryl/caprylyl polyglucosides (60% en masse de matière active) commercialisée sous le nom de marque Simulsol™SL8 (notée composition S'2), dans des proportions massiques telles qu'indiquées dans le tableau 1 ci-dessous.

Les latex inverses auto-inversibles résultant de ces mélanges sont respectivement notés ($E_1$), ($E_2$), ($E_3$), ($E_{C1}$), ($E_{C2}$) et ($E_{C3}$) et sont évalués par l'observation de leur aspect à 25°C, par leur viscosité à 25°C, par la vitesse d'inversion lors de la préparation d'un gel aqueux à 2% massique de latex inverse auto-inversible, par la viscosité de ce gel aqueux à 2% massique d'un latex inverse auto-inversible et par la viscosité d'un gel aqueux à 3% massique de latex inverse auto-inversible en présence de 0,1% massique de chlorure de sodium.

La méthode d'évaluation de la durée d'inversion des latex inverses auto-inversibles consiste à verser dans un bécher d'un litre, la quantité d'eau nécessaire à la préparation d'un gel aqueux de 800 grammes. On place vers le fond bécher une hélice d'agitateur mécanique de type Turbotest™ connectée à un moteur. L'agitation est démarrée à une vitesse de 200 tours /minute et la quantité nécessaire de latex inverse auto-inversible à évaluer est introduite dans le bécher sous agitation. L'agitation est augmentée progressivement afin de conserver la même hauteur du vortex dans le bécher pendant toute la phase d'épaississement, jusqu'à l'obtention d'un gel homogène et lisse. La durée d'inversion des latex inverses auto-inversibles correspond au temps écoulé entre le début de l'ajout du latex inverse auto-inversible testé et l'obtention d'un gel lisse, exempt de grumeaux. Les résultats obtenus sont consignés dans le tableau 1 ci-dessous.

**Tableau 1**

| **Latex inverse auto-inversible** | | |
|---|---|---|
| ($E_1$) | ($E_2$) | ($E_3$) |
| **Proportion massique en composition tensioactive testée contenue dans** le latex **inverse auto-inversible** | | |
| ($C_{e2A}$) : 6% | ($C_{e2B}$) : 6% | ($C_{e2C}$) : 6% |
| **Viscosité de gels aqueux et du latex inverse auto-inversible (en mPas) (Brookfield RVT)** | | |
| Gel à 2% massique en latex inverse auto-inversible (Mobile 6 Vitesse 5) | | |
| 81.000 | 74.000 | 86.000 |
| Gel aqueux à 3% massique en latex inverse auto-inversible (Mobile 6 Vitesse 5) | | |
| 124.800 | 122.000 | 130.000 |
| Gel aqueux à 3% massique en latex inverse auto-inversible + 0,1% massique en NaCl (Mobile 6 Vitesse 5) | | |
| 33.200 | 32.640 | 28.900 |

(suite)

| Viscosité de gels aqueux et du latex inverse auto-inversible (en mPas) (Brookfield RVT) | | |
|---|---|---|
| Latex inverse auto-inversible à 25°C (Mobile 3 Vitesse 20) | | |
| 2.330 | 1.530 | 1.560 |
| **Durée d'inversion (en minutes)** | | |
| 2 | 6 | 6 |
| **Aspect latex inverse auto-inversible à 25°C** | | |
| Homogène | Homogène | Homogène |
| **Latex inverse auto-inversible** | | |
| ($E_{C1}$) | ($E_{C2}$) | ($E_{C3}$) |
| **Proportion massique en composition tensioactive testée contenue dans** le latex **inverse auto-inversible** | | |
| ($C_{e2T}$) : 5% | ($S_2$) : 5% | ($S'_2$) : 5% |
| **Viscosité de gels aqueux et du latex inverse auto-inversible à 25°C (en mPas) (Brookfield RVT)** | | |
| Gel à 2% massique en latex inverse auto-inversible (Mobile 6 Vitesse 5) | | |
| Non mesurée | 67.000 | 75.200 |
| Gel aqueux à 3% massique en latex inverse auto-inversible (Mobile 6 Vitesse 5) | | |
| Non mesurée | 118.000 | 120.000 |
| Gel aqueux à 3% massique en latex inverse auto-inversible + 0,1% massique en NaCl (Mobile 6 Vitesse 5) | | |
| Non mesurée | 22.400 | 22.400 |
| Latex inverse auto-inversible à 25°C (Mobile 3 Vitesse 20) | | |
| 1.120 | 1.450 | 1.250 |
| **Durée d'inversion (en minutes)** | | |
| > 1.440 | 2 | 3 |
| **Aspect latex inverse auto-inversible à 25°C** | | |
| Présence de grains après 24 heures ; hétérogène | Homogène | Présence de grains |
| *nm : non mesuré | | |

Les latex inverses auto-inversibles ($E_1$), ($E_2$) et ($E_3$) selon l'invention, exempts de dérivés alkoxylés, permettent d'obtenir des gels lisses, avec une durée d'inversion inférieure à 10 minutes, possédant d'excellentes propriétés épaississantes. De plus ils se caractérisent une moindre chute de la viscosité d'un gel à 3% massique en présence de sel en comparaison notamment avec le latex inverse auto-inversible ($E_{S'2}$).

**III - Préparation et évaluation de latex inverses auto-inversibles d'un homopolymère du sel de sodium de l'acide 2-méthyl-[(1-oxo-2-propènyl) amino] 1-propanesulfonique.**

On prépare une phase aqueuse en versant successivement dans un bécher et sous agitation, 220 grammes d'eau permutée, 343,5 grammes d'acide 2-méthyl-[(1-oxo-2-propenyl) amino] 1-propanesulfonique, 138,1 grammes d'une solution aqueuse à 48% en masse d'hydroxyde de sodium, 0,18 gramme d'une solution commerciale à 40% massique de diéthylènetriamine penta-acétate de sodium et 0,140 gramme de méthylène bis(acrylamide). Le pH de cette phase aqueuse est ensuite ajusté à 3,5 et la solution complétée avec de l'eau permutée jusqu'à peser 707 grammes.
On prépare indépendamment une phase organique en mélangeant 220 grammes d'isohexadécane, 22 grammes de Montane™ 80VG, et 0,2 gramme d'AIBN.
La phase aqueuse préparée est ensuite ajoutée progressivement sur la phase huileuse puis dispersée à l'aide d'un rotor stator type Ultra Turrax commercialisé par la société Ika.
L'émulsion obtenue est transférée dans un réacteur pour être soumise à un barbotage d'azote pour éliminer

l'oxygène et refroidie à environ 5-6 °C. 5 $cm^3$ d'une solution à 0,42% en masse d'hydroperoxyde de cumène dans l'isohexadécane sont ajoutés à l'émulsion maintenue sous agitation, puis une solution aqueuse à 2,5% en masse de métabisulfite de sodium est introduite progressivement à un débit de 0,5 $cm^3$ par minute pendant soixante minutes pour initier la réaction de polymérisation. La température du milieu augmentera jusqu'à atteindre un palier. Le milieu réactionnel est maintenu à cette température pendant une heure et demi puis l'ensemble est refroidi jusqu'à environ 35°C pour obtenir le mélange noté ($M_3$).

Le mélange ($M_3$) précédemment obtenu est fractionné en différentes portions, auxquelles sont ajoutées différentes compositions tensioactives ($C_{e2A}$), ($S_2$) et ($S'_2$), dans des proportions massiques telles qu'indiquées dans le tableau 2 ci-dessous, pour obtenir les latex inverses auto-inversibles respectivement référencés ($E_4$), ($E_{C4}$) et ($E_{C5}$). Ils sont évalués comme au paragraphe II précédent. Les résultats obtenus sont consignés dans le tableau 2 ci-dessous.

**Tableau 2**

| **Latex inverse auto-inversible** | | |
|---|---|---|
| ($E_4$) | ($E_{C4}$) | ($E_{C5}$) |
| **Proportion massique en composition tensioactive testée contenue dans le latex inverse auto-inversible** | | |
| ($C_{e2A}$) : 5% | ($S_2$) : 5% | ($S'_2$) : 5% |
| **Viscosité des gels aqueux et du latex inverse auto-inversible à 25°C (en mPas) (Brookfield RVT)** | | |
| Gel à 2% massique en latex inverse auto-inversible (Mobile 6 Vitesse 5) | | |
| 117.000 | 103.000 | Non mesurée |
| Gel à 3% massique en latex inverse auto-inversible + 0,1% massique NaCl (Mobile 6 Vitesse 5) mPa.s | | |
| 6.500 | 6.320 | Non mesurée |
| Latex inverse auto-inversible (Mobile 3 Vitesse 20) | | |
| 2.660 | 1.935 | Non mesurée |
| **Durée d'inversion en minute** | | |
| 4 | 3 | Non mesurée |
| **Aspect du latex inverse auto-inversible à 25°C** | | |
| Latex homogène | Latex homogène | Latex visqueux, granuleux, hétérogène |

Le latex inverse auto-inversible ($E_4$) selon l'invention, exempt de dérivés alkoxylés et plus particulièrement éthoxylés, permet d'obtenir un gel lisse, avec une durée d'inversion inférieure à 10 minutes, possédant d'excellentes propriétés épaississantes.

**IV - Préparation et évaluation d'un latex inverse comprenant un copolymère réticulé du sel de sodium de l'acide 2-méthyl-[(1-oxo-2-propènyl)** amino] **1-propanesulfonique et d'acrylate de (2-hydroxy éthyle).**

On prépare une phase aqueuse en versant successivement dans un bécher et sous agitation, 20,4 grammes d'acrylate de (2-hydroxy éthyle), 660 grammes d'une solution aqueuse commerciale à 55% en masse d'acide 2-méthyl-[(1-oxo-2-propenyl) amino] 1-propanesulfonate de sodium, 0,45 gramme d'une solution aqueuse commerciale à 40% en masse de diéthylènetriamine penta-acétate de sodium et 0,123 gramme de méthylène bis(acrylamide). Le pH de cette phase aqueuse est ensuite ajusté à 4,0 en ajoutant 0,55 gramme d'acide 2-méthyl-[(1-oxo-2-propènyl) amino] 1-propanesulfonique.

On prépare indépendamment une phase organique en mélangeant 265 grammes de squalane, 17,76 grammes de Montane™ 80 VG, 9,24 grammes Montanox™ 81 VG et 0,2 grammes d'azo bis(isobutyronitryle) (AIBN).

La phase aqueuse préparée est ensuite ajoutée progressivement sur la phase huileuse puis dispersée à l'aide d'un rotor stator type Ultra Turrax commercialisé par la société Ika.

L'émulsion obtenue est transférée dans un réacteur pour être soumise à un barbotage d'azote pour éliminer l'oxygène et refroidie à environ 5-6 °C. 10 $cm^3$ d'une solution à 0,28% en masse d'hydroperoxyde de cumène dans le squalane sont ajoutés à l'émulsion maintenue sous agitation, puis une solution aqueuse à 2,5% en masse de métabisulfite de sodium est introduite progressivement à un débit de 0,5 $cm^3$ par minute pendant soixante minutes pour initier la réaction de polymérisation et en laissant monter la température jusqu'à 75 C. On maintient alors le milieu réactionnel

pendant environ 60 minutes à cette température, à l'issu desquelles le mélange obtenu est refroidi jusqu'à 35 environ. L'ensemble est refroidi jusqu'à une température d'environ 35°C ($M_4$).

Le mélange ($M_4$) précédemment obtenu est fractionné en différentes portions auxquelles sont ajoutées les différentes compositions tensioactives ($C_{e2A}$), ($S_2$), et ($S'_2$), dans des proportions massiques telles qu'indiquées dans le tableau 3 ci-dessous.

Les latex inverses auto-inversibles résultant de ces mélanges sont respectivement notés ($E_5$), ($E_{C6}$) et ($E_{C7}$). Ils sont évalués comme au paragraphe II précédent. Les résultats obtenus sont consignés dans le tableau 3 suivant :

**Tableau 3**

| **Latex inverse auto-inversible** | | |
|---|---|---|
| ($E_5$) | ($E_{c6}$) | ($E_{C7}$) |
| **Proportion massique en composition tensioactive testée contenue dans le latex inverse auto-inversible** | | |
| ($C_{e2A}$) : 3% | ($S_2$) : 3% | ($S'_2$) : 3% |
| **Viscosité des gels aqueux et du latex inverse auto-inversible à 25°C (en mPas) (Brookfield RVT)** | | |
| Gel à 3% massique en latex inverse auto-inversible (Mobile 6 Vitesse 5) | | |
| 99.600 | 105.400 | 98.000 |
| Gel à 3% massique en latex inverse auto-inversible + 0,1% massique NaCl (Mobile 6 Vitesse 5) mPa.s | | |
| 9.900 | 30540 | 2.830 |
| Latex inverse auto-inversible (Mobile 3 Vitesse 20) | | |
| 2.050 | 1.800 | 2.100 |
| **Durée d'inversion en minute** | | |
| 6 | 3 | 3 |
| **Aspect du latex inverse auto-inversible à 25°C** | | |
| Latex homogène | Latex homogène | Latex visqueux, granuleux, hétérogène |

Le latex inverse auto-inversible ($E_5$) selon l'invention, exempt de dérivés alkoxylés et plus particulièrement éthoxylés, permet d'obtenir un gel lisse, avec une durée d'inversion inférieure à 10 minutes, possédant d'excellentes propriétés épaississantes.

**V - Préparation d'un latex inverse comprenant un copolymère réticulé du sel de sodium de l'acide 2-méthyl-[(1-oxo-2-propènyl) amino] 1-propanesulfonique et d'acrylamide**

On prépare une phase aqueuse en versant successivement dans un bécher et sous agitation, 80 grammes d'eau permutée, 253,8 grammes d'une solution aqueuse commerciale à 50% en masse d'acrylamide, 246,7 grammes d'acide 2-méthyl-[(1-oxo-2-propènyl) amino] 1-propanesulfonique, 95,96 grammes d'une solution aqueuse à 48% en masse d'hydroxyde de sodium, 0,45 gramme d'une solution commerciale à 40% en poids de diéthylènetriamine penta-acétate de sodium et 0,115 gramme de méthylène bis(acrylamide). Le pH de cette phase aqueuse est ensuite ajusté à 5,5 et la solution complétée avec de l'eau permutée jusqu'à peser 682 grammes.

On prépare indépendamment une phase organique en mélangeant 220 grammes d'isohexadécane, 21 grammes de Montane™ 80 VG et 0,2 grammes d'azo bis(isobutyronitryle) (AIBN).

La phase aqueuse préparée est ensuite ajoutée progressivement sur la phase huileuse puis dispersée à l'aide d'un rotor stator type Ultra Turrax commercialisé par la société Ika.

L'émulsion obtenue est transférée dans un réacteur pour être soumise à un barbotage d'azote pour éliminer l'oxygène et refroidie à environ 5-6 °C. 5 $cm^3$ d'une solution à 0,28% en masse d'hydroperoxyde de cumène dans l'hexadécane sont ajoutés à l'émulsion maintenue sous agitation, puis une solution aqueuse à 2,5% en masse de métabisulfite de sodium est introduite progressivement à un débit de 0,5 $cm^3$ par minute pendant soixante minutes pour initier la réaction de polymérisation et en laissant monter la température jusqu'à 75 C. On maintient alors le milieu réactionnel pendant environ 60 minutes à cette température, à l'issu desquelles le mélange obtenu est refroidi jusqu'à 35°C environ. L'ensemble est refroidi jusqu'à une température d'environ 35°C ($M_5$).

Le mélange ($M_4$) précédemment obtenu est fractionné en différentes portions auxquelles sont ajoutées différentes proportions massiques de la composition tensioactive ($C_{e2A}$), tel qu'indiqué dans le tableau 4 ci-dessous.

Les latex inverses auto-inversibles résultant de ces mélanges sont respectivement notés ($E_{C8}$) et ($E_{C9}$). Ils sont évalués comme au paragraphe II précédent. Les résultats obtenus sont consignés dans le tableau 4 suivant.

**Tableau 5**

| **Latex inverse auto-inversible** | |
|---|---|
| ($E_{c8}$) | ($E_{C9}$) |
| **Proportion massique en composition tensioactive testée contenue dans le latex inverse auto-inversible** | |
| ($C_{e2A}$) : 5% | ($C_{e2A}$) : 5,5% |
| **Viscosité des gels aqueux et du latex inverse auto-inversible à 25°C (en mPas) (Brookfield RVT)** | |
| Gel à 3% massique en latex inverse auto-inversible (Mobile 6 Vitesse 5) | |
| 159.000 | 163.000 |
| Gel à 3% massique en latex inverse auto-inversible + 0,1% massique NaCl (Mobile 6 Vitesse 5) mPa.s | |
| 16.480 | 15.400 |
| Latex inverse auto-inversible (Mobile 3 Vitesse 20) | |
| Non mesuré | Non mesurable |
| **Durée d'inversion en minute** | |
| 90 | 8 |
| **Aspect du latex inverse auto-inversible à 25°C** | |
| Latex homogène et visqueux | Latex visqueux, hétérogène et filant |

Les latex inverses auto-inversibles ($E_{c8}$) et ($E_{c9}$), exempts de dérivés alkoxylés, ne permettent pas d'obtenir un gel lisse avec une durée d'inversion inférieure à 10 minutes et présentant un aspect homogène.

**VI : Formulations illustratives**

Dans les formulations suivantes, les pourcentages sont exprimés en pourcentage massique pour 100% de la masse de la formulation.

**$VI_A$ - Composition nettoyante pour fours et grilles de cuissons**

| Ingrédients | Teneur massique |
|---|---|
| SIMULSOL™OX1309L(1) | 2% |
| SIMULSOL™SL7G(2) | 2% |
| Composition ($E_1$) | 6% |
| Hydroxyde de sodium : | 25% |
| Eau : | qs 100% |

(1) : SIMULSOL™ OX1309L : composition tensioactive détergente commercialisée par la société SEPPIC, comprenant des alcools polyéthoxylés résultant de la réaction d'un équivalent molaire d'un alcool commercialisé sous le nom de marque EXXAL™13 avec 9 équivalents molaires d'oxyde d'éthylène.
(2) : SIMULSOL™SL7G : solution de n-heptyl polyglucosides, agent hydrotrope et solulbilisant commercialisé par lasociété SEPPIC

Préparation

a) Un pré-gel est préparé à 20°C par l'addition du SIMULSOL™OX1309L, puis de le SIMULSOL™SL7G dans l'eau. La composition ($E_1$) selon l'invention est ensuite introduite dans la solution aqueuse et mélangé jusqu'à l'obtention d'un gel de viscosité stable.

b) La soude est ensuite introduit progressivement sous agitation mécanique à une température de 20°C jusqu'à l'obtention d'un gel homogène.

Le gel obtenu à l'issue de l'étape b) est d'un aspect homogène et limpide, de viscosité 10.000 mPa.s (Brookfield LVT à une vitesse de 6 tours/minute). Après une période de stockage de 6 mois à 25°C, le gel obtenu à l'issue de l'étape b) de ce mode opératoire présente un aspect homogène et limpide, de viscosité 12.000 mPa.s (Brookfield LVT, à une vitesse de 6 tours/minute).

Procédé de nettoyage

La compositon préparée ci-dessus est pulvérisée à température ambiante sur les parois d'un four souillé par des graisses alimentaires et sur les grilles de cuissons également souillées par des graisses alimentaires. Après dix minutes, les parois du fours et les grilles de cuisson sont rincées à l'aide d'eau chaude à 60°C. Les parois du four et la surfaces des grilles de cuisson ainsi nettoyé ne présentent plus de salissures.

**$V_B$ - Nettoyant pour surfaces en aluminium**

| Ingrédients | Teneur massique |
|---|---|
| SIMULSOL™OX1309L | 3% |
| SIMULSOL™SL7G | 3% |
| Composition ($E_1$) | 5% |
| Acide phosphorique à 75% | 40% |
| HORDAPHOS(3) MDGB 1% | 5% |
| Dipropylèneglycol méthyl éther | 5%l |
| Eau : | qs 100% |

(3): HORDAPHOS™ MDGB est une composition à base d'esters phosphoriques, utilisée comme agent anti-corrosion.

Préparation

Chaque ingrédient est introduit successivement dans une cuve de mélange sous agitation mécanique modérée, à température ambiante, jusqu'à l'obtention d'une composition homogène et limpide. L'agitation est maintenue pendant 30 minutes à 20°C. La composition obtenue présente une valeur de pH mesurée inférieure à 1,0 et est limpide et homogène après stockage pendant une durée d'un mois à 40°C.

Procédé de nettoyage

On dilue à 3% dans l'eau la composition préparée au paragraphe précédent et la solution ainsi obtenue est pulvérisée sur la paroi en aluminium à nettoyer. Cette paroi est ensuite rincée avec de l'eau chaude à 60°C.

## Revendications

1. Emulsion de type eau-dans-huile (E) comprenant pour 100% de sa masse :

   **a)** - de 10% massique à 80% massique, d'un polymère (P) réticulé, issu de la polymérisation pour 100% molaire :

   **($a_1$)** - d'une proportion supérieure ou égale à 30% molaire et inférieure ou égale à 100% molaire, d'unités monomériques issues d'un monomère possédant une fonction acide fort, partiellement salifiée ou totalement salifiée ; et

**($a_2$)** - Optionnellement d'une proportion supérieure à 0% molaire et inférieure ou égale à 70% molaire, d'unités monomériques issues d'au moins un monomère choisi parmi les éléments du groupe constitué par l'acide acrylique, l'acide méthacrylique, l'acide itaconique, l'acide maléique, l'acide 3-méthyl 3-[(1-oxo 2-propènyl) amino] butanoïque,
la fonction carboxylique desdits monomères étant sous forme acide, partiellement salifiés ou totalement salifiés et/ou parmi les éléments du groupe constitué par l'acrylate de (2-hydroxy éthyle), l'acrylate de (2,3-dihydroxy propyle), le méthacrylate de (2-hydroxy éthyle), le méthacrylate de (2,3-dihydroxy propyle) ou le vinyl pyrrolidone ;
**($a_3$)** - d'une proportion supérieure à 0% molaire et inférieure ou égale à 1% molaire d'unités monomériques issues d'au moins un monomère de réticulation (AR) diéthylénique ou polyéthylénique ; étant entendu que la somme des proportions molaires des unités monomériques ($a_1$), ($a_2$) et ($a_3$) est égale à 100% ;

**b)** - de 5% massique à 50% massique, d'une phase grasse constituée d'au moins une huile (H), et
**c)** - de 1% massique à 50% massique d'eau,
**d)** - de 0,5% massique à 10% massique d'un système émulsionnant ($S_1$) de type eau-dans-huile, et
**e)** - de 2% massique à 10% massique d'un système émulsionnant ($S_2$) de type huile-dans-eau comprenant pour 100% de sa masse, au moins 50% massique d'une composition ($C_e$) comprenant pour 100% de sa masse :

**$e_1$)** - Une proportion supérieure ou égale à 20% massique et inférieure ou égale à 80% massique d'un agent diluant de formule (I) :

$$HO\text{-}[CH_2\text{-}CH(OH)\text{-}CH_2\text{-}O\text{-}]_n\text{-}H \qquad (I),$$

dans laquelle n représente un nombre entier supérieur ou égal à 1 et inférieur ou égal à 6, ou d'un mélange desdits agents diluants,
**$e_2$)** - Une proportion supérieure ou égale à 20% massique et inférieure ou égale à 80% massique d'une composition ($C_{e2}$) comprenant pour 100% de sa masse :

**$e_{2\alpha}$)** - Une proportion supérieure à 0% et inférieure ou égale à 4% massique d'au moins un alcool de formule (II) :

$$C_mH_{2m+1}\text{-}OH \qquad (II),$$

dans laquelle m représente un nombre entier pair supérieur ou égal à 8 et inférieur ou égal à 18 ;
**$e_{2\beta}$)** - Une proportion supérieure ou égale à 96% massique et inférieure à 100% massique d'une composition ($C_{2\beta}$) comprenant :
**$e_{2\beta2}$)** - Une proportion supérieure ou égale à 60% massique et inférieure ou égale 90% massique d'une composition ($C_{2\beta2}$) comprenant pour 100% de sa masse :

**$e_{2\beta21}$)** - Une proportion supérieure ou égale à 5% massique et inférieure ou égale à 20% massique d'une composition ($C_{21}$) représentée par la formule (III) :

$$R_{21}\text{-}O\text{-}(G_{21})_r\text{-}H \qquad (III),$$

dans laquelle $R_{21}$ représente le radical n-dodécyle, $G_{21}$ représente le reste d'un sucre réducteur et r représente un nombre décimal supérieur ou égal à 1,05 et inférieur ou égal à 5,00, ladite composition ($C_{21}$) consistant en un mélange des composés de formules ($III_1$), ($III_2$), ($III_3$), ($III_4$) et ($III_5$) :

$$R_{21}\text{-}O\text{-}(G_{21})_1\text{-}H \qquad (III_1),$$

$$R_{21}\text{-}O\text{-}(G_{21})_2\text{-}H \qquad (III_2),$$

$$R_{21}\text{-}O\text{-}(G_{21})_3\text{-}H \qquad (III_3),$$

$$R_{21}\text{-}O\text{-}(G_{21})_4\text{-}H \qquad (III_4),$$

$$R_{21}\text{-}O\text{-}(G_{21})_5\text{-}H \qquad (III_5),$$

en des proportions molaires en dits composés de formules ($III_1$), ($III_2$), ($III_3$), ($III_4$) et ($III_5$) respectivement égales à $a_1$, $a_2$, $a_3$, $a_4$ et $a_5$, telles que la somme $a_1 + a_2 + a_3 + a_4 + a_5$ est égale à un, et que la somme $a_1 + 2_{a2} + 3_{a3} + 4_{a4} + 5a_5$ est égale à r ;

**$e_{2\beta22}$)** - Une proportion supérieure ou égale à 10% massique et inférieure ou égale à 20% massique d'une composition ($C_{22}$) représentée par la formule (IV) :

$$R_{22}\text{-O-}(G_{22})_s\text{-H} \qquad \text{(IV)},$$

dans laquelle $R_{22}$ représente le radical n-tétradécyle, $G_{22}$ représente le reste d'un sucre réducteur et s représente un nombre décimal supérieur ou égal à 1,05 et inférieur ou égal à 5,00, ladite composition ($C_{22}$) consistant en un mélange des composés de formules ($IV_1$), ($IV_2$), ($IV_3$), ($IV_4$) et ($IV_5$) :

$$R_{22}\text{-O-}(G_{22})_1\text{-H} \qquad (IV_1),$$

$$R_{22}\text{-O-}(G_{22})_2\text{-H} \qquad (IV_2),$$

$$R_{22}\text{-O-}(G_{22})_3\text{-H} \qquad (IV_3),$$

$$R_{22}\text{-O-}(G_{22})_4\text{-H} \qquad (IV_4),$$

$$R_{22}\text{-O-}(G_{22})_5\text{-H} \qquad (IV_5),$$

en des proportions molaires en dits composés de formules ($IV_1$), ($IV_2$), ($IV_3$), ($IV_4$) et ($IV_5$) respectivement égales à $b_1$, $b_2$, $b_3$, $b_4$ et $b_5$, telles que la somme : $b_1 + b_2 + b_3 + b_4 + b_5$ est égale à un, et que la somme $b_1 + 2b_2 + 3b_3 + 4b_4 + 5b_5$ est égale à s ;

$e_{2\beta23}$) - Une proportion supérieure ou égale à 25% massique et inférieure ou égale à 40% massique d'une composition ($C_{23}$) représentée par la formule (V) :

$$R_{23}\text{-O-}(G_{23})_t\text{-H} \qquad \text{(V)},$$

dans laquelle $R_{23}$ représente le radical n-octyle, $G_{23}$ représente le reste d'un sucre réducteur et t représente un nombre décimal supérieur ou égal à 1,05 et inférieur ou égal à 5,00, ladite composition ($C_{23}$) consistant en un mélange des composés de formules ($V_1$), ($V_2$), ($V_3$), ($V_4$) et ($V_5$) :

$$R_{23}\text{-O-}(G_{23})_1\text{-H} \qquad (V_1),$$

$$R_{23}\text{-O-}(G_{23})_2\text{-H} \qquad (V_2),$$

$$R_{23}\text{-O-}(G_{23})_3\text{-H} \qquad (V_3),$$

$$R_{23}\text{-O-}(G_{23})_4\text{-H} \qquad (V_4),$$

$$R_{23}\text{-O-}(G_{23})_5\text{-H} \qquad (V_5),$$

en des proportions molaires en dits composés de formules ($V_1$), ($V_2$), ($V_3$), ($V_4$) et ($V_5$) respectivement égales à $c_1$, $c_2$, $c_3$, $c_4$ et $c_5$, telles que la somme : $c_1 + c_2 + c_3 + c_4 + c_5$ est égale à un, et que la somme $c_1 + 2c_2 + 3c_3 + 4c_4 + 5c_5$ est égale à t ;

**e**$_{2\beta24}$) - Une proportion massique supérieure ou égale à 30% massique et inférieure ou égale à 55% massique d'une composition ($C_{24}$) représentée par la formule (VI) :

$$R_{24}\text{-O-}(G_{24})u\text{-H} \qquad \text{(VI)},$$

dans laquelle $R_{24}$ représente le radical n-décyle, $G_{24}$ représente le reste d'un sucre réducteur et u représente un nombre décimal supérieur ou égal à 1,05 et inférieur ou égal à 5,00, ladite composition ($C_{24}$) consistant en un mélange des composés de formules ($VI_1$), ($VI_2$), ($VI_3$), ($VI_4$) et ($VI_5$) :

$R_{24}$-O-$(G_{24})_1$-H (VI$_1$),

$R_{24}$-O-$(G_{24})_2$-H (VI$_2$),

$R_{24}$-O-$(G_{24})_3$-H (VI$_3$),

$R_{24}$-O-$(G_{24})_4$-H (VI$_4$),

$R_{24}$-O-$(G_{24})_5$-H (VI$_5$),

en dans les proportions molaires en dits composés de formules (VI$_1$), (VI$_2$), (VI$_3$), (VI$_4$) et (VI$_5$) respectivement égales à $d_1$, $d_2$, $d_3$, $d_4$ et $d_5$, telles que la somme: $d_1 + d_2 + d_3 + d_4 + d_5$ est égale à un, et que la somme $d_1 + 2d_2 + 3d_3 + 4d_4 + 5d_5$ est égale à u ; étant entendu que la somme des proportions massiques des compositions ($C_{21}$), ($C_{22}$), ($C_{23}$), et ($C_{24}$), est égale à 100% ;

**e**$_{2\beta3}$) - une proportion supérieure ou égale à 10% massique et inférieure ou égale à 40% massique d'une composition ($C_{2\beta3}$) comprenant pour 100% de sa masse :

**e**$_{2\beta31}$) - Une proportion supérieure ou égale à 30% massique et inférieure ou égale à 50% massique d'une composition ($C_{31}$) représentée par la formule (VII) :

$R_{31}$-O-$(G_{31})_x$-H (VII)

dans laquelle $R_{31}$ représente le radical n-hexadécyle, $G_{31}$ représente le reste d'un sucre réducteur et x représente un nombre décimal supérieur ou égal à 1,05 et inférieur ou égal à 5,00, ladite composition ($C_{31}$) consistant en un mélange des composés de formules (VII$_1$), (VII$_2$), (VII$_3$), (VII$_4$) et (VII$_5$) :

$R_{31}$-O-$(G_{31})_1$-H (VII$_1$),

$R_{31}$-O-$(G_{31})_2$-H (VII$_2$),

$R_{31}$-O-$(G_{31})_3$-H (VII$_3$),

$R_{31}$-O-$(G_{31})_4$-H (VII$_4$),

$R_{31}$-O-$(G_{31})_5$-H (VII$_5$),

en des proportions molaires en dits composés de formules (VII$_1$), (VII$_2$), (VII$_3$), (VII$_4$) et (VII$_5$) respectivement égales $a'_1$, $a'_2$, $a'_3$, $a'_4$ et $a'_5$, telles que la somme $a'_1 + a'_2 + a'_3 + a'_4 + a'5$ est égale à un, et que la somme $a'_1 + 2a'_2 + 3a'_3 + 4a'_4 + 5a'_5$ est égale à $\times$ ;

**e**$_{2\beta32}$) - Une proportion supérieure ou égale à 50% massique et inférieure ou égale à 70% massique d'une composition ($C_{32}$) représentée par la formule (VIII) :

$R_{32}$-O-$(G_{32})_y$-H (VIII),

dans laquelle $R_{32}$ représente le radical n-octadécyle, $G_{32}$ représente le reste d'un sucre réducteur et y représente un nombre décimal supérieur ou égal à 1,05 et inférieur ou égal à 5,00, ladite composition ($C_{32}$) consistant en un mélange des composés de formules (VIII$_1$), (VIII$_2$), (VIII$_3$), (VIII$_4$) et (VIII$_5$) :

$R_{32}$-O-$(G_{32})_1$-H (VIII$_1$),

$R_{32}$-O-$(G_{32})_2$-H (VIII$_2$),

$R_{32}$-O-$(G_{32})_3$-H (VIII$_3$),

$R_{32}$-O-$(G_{32})_4$-H (VIII$_4$),

$R_{32}$-O-$(G_{32})_5$-H (VIII$_5$),

en des proportions molaires en dits composés de formules (VIII$_1$), (VIII$_2$), (VIII$_3$), (VIII$_4$) et (VIII$_5$) respectivement égales à $b'_1$, $b'_2$, $b'_3$, $b'_4$ et $b'_5$, telles que la somme $b'_1 + b'_2 + b'_3 + b'_4 + b'_5$ est égale à 1, et que la somme $b'_1 + 2b'_2 + 3b'_3 + 4b'_4 + 5b'_5$ est égale à y, étant entendu que la somme des proportions massiques des compositions ($C_{31}$) et ($C_{32}$) est égale à 100%,et étant entendu que la somme des proportions massiques des composés (a), (b), (c), (d) et (e) est égale à 100%.

**2.** Emulsion de type eau-dans-huile (E) telle que définie à la revendication 1, dans laquelle le polymère (P) est choisi parmi :

- Un homopolymère de l'acide 2-méthyl 2-[(1-oxo 2-propènyl) amino] 1-propanesulfonique partiellement ou totalement salifié sous forme de sel de sodium ou de sel d'ammonium, réticulé par le triallylamine et/ou le méthylène-bis(acrylamide) ;
- Un copolymère de l'acide 2-méthyl 2-[(1-oxo 2-propènyl) amino] 1-propanesulfonique, partiellement ou totalement salifié sous forme de sel de sodium ou de sel d'ammonium, et d'acrylate de (2-hydroxy éthyle), réticulé par le triallylamine et/ou le méthylènebis(acrylamide) ;
- Un copolymère de l'acide 2-méthyl 2-[(1-oxo 2-propènyl) amino] 1-propanesulfonique et de l'acide acrylique partiellement ou totalement salifiés sous forme de sel de sodium ou de sel d'ammonium, réticulé par le triallylamine et/ou le méthylène-bis(acrylamide) ;
- Un copolymère réticulé de l'acide 2-méthyl 2-[(1-oxo 2-propènyl) amino] 1 propanesulfonique ($\gamma$) partiellement ou totalement salifié sous forme de sel de sodium, et d'acrylate de (2-hydroxy éthyle) ($\delta$) dans un rapport molaire ($\gamma$)/ ($\delta$) compris entre 30/70 et 90/10 ;
- Un copolymère réticulé de l'acide 2-méthyl 2-[(1-oxo 2-propènyl) amino] 1 propanesulfonique ($\gamma$) partiellement ou totalement salifié sous forme de sel de sodium, et d'acrylate de (2-hydroxy éthyle) ($\delta$) dans un rapport molaire (y)/ ($\delta$) compris entre 40/60 et 90/10 ;
- Un copolymère réticulé de l'acide 2-méthyl 2-[(1-oxo 2-propènyl) amino] 1-propanesulfonique ($\gamma$) partiellement ou totalement salifié sous forme de sel de sodium, et d'acide acrylique ($\varepsilon$) partiellement ou totalement salifié sous forme de sel de sodium dans un rapport molaire ($\gamma$)/($\varepsilon$) supérieur ou égal à 30/70 et inférieur ou égal à 90/10 ; et
- Un copolymère réticulé de l'acide 2-méthyl 2-[(1-oxo 2-propènyl) amino] 1-propanesulfonique ($\gamma$) partiellement ou totalement salifié sous forme de sel de sodium, et d'acide acrylique ($\varepsilon$) partiellement ou totalement salifié sous forme de sel de sodium dans un rapport molaire ($\gamma$)/($\varepsilon$) supérieur ou égal à 40/60 et inférieur ou égal à 90/10.

**3.** Emulsion de type eau-dans-huile (E) telle que définie à l'une ou quelconque des revendications 1 ou 2, **caractérisée en ce que** l'agent diluant de formule (I) est le glycérol.

**4.** Emulsion de type eau-dans-huile (E) telle que définie à l'une ou quelconque des revendications 1 à 3, **caractérisée en ce que** dans les formules (III), (IV), (V) et (VI), lesdits restes d'un sucre réducteur $G_{21}$, $G_{22}$, $G_{23}$, $G_{24}$ sont identiques et représentent le reste du glucose.

**5.** Emulsion de type eau-dans-huile (E) telle que définie à l'une ou quelconque des revendications 1 à 4, **caractérisée en ce que** dans les formules (III), (IV), (V) et (VI), r, s, t et u respectivement, représentent indépendamment l'un de l'autre un nombre décimal supérieur ou égal à 1,05 et inférieur ou égal à 2,5.

**6.** Emulsion de type eau-dans-huile (E) telle que définie à l'une ou quelconque des revendications 1 à 5, **caractérisée en ce que** dans les formules (VII) et (VIII), lesdits restes d'un sucre réducteur $G_{31}$ et $G_{32}$ sont identiques et représentent le reste du glucose.

**7.** Emulsion de type eau-dans-huile (E) telle que définie à l'une ou quelconque des revendications 1 à 6, **caractérisée en ce que** dans les formules (VII) et (VIII), x et y respectivement, représentent un nombre décimal supérieur ou égal à 1,05 et inférieur ou égal à 2,5.

**8.** Emulsion de type eau-dans-huile (E) telle que définie à l'une ou quelconque des revendications 1 à 7, **caractérisée en ce que** le ratio massique :

$$\Delta = \text{masse de la composition } (C_{2\beta2}) / \text{masse de la composition } (C_{2\beta3}),$$

est supérieur ou égal à 1 et inférieur ou égal à 10.

**9.** Utilisation de l'émulsion de type eau-dans-huile (E) telle que définie à l'une des revendications 1 à 8, comme agent épaississant et/ou émulsionnant et/ou stabilisant d'une composition aqueuse liquide détergente à usage ménager ou industriel.

**10.** Composition aqueuse liquide détergente (F) à usage ménager ou industriel **caractérisée en ce qu'**elle comprend comme agent épaississant, pour 100% de sa masse totale entre 0,1 % et 10 % massique de l'émulsion de type eau-dans-huile (E) telle que définie à l'une des revendications 1 à 8.

**11.** Utilisation de la composition aqueuse liquide détergente (F) à usage ménager ou industriel telle que définie à la revendication 10, pour nettoyer les surfaces dures.

**12.** Procédé de nettoyage d'une surface dure, **caractérisé en ce qu'**il comprend :

au moins une étape a"$_1$) d'application de la composition aqueuse liquide détergente (F) à usage ménager ou industriel telle que définie à la revendication 10,
d'au moins une étape b"$_1$) de rinçage de ladite surface dure.

**Patentansprüche**

**1.** Emulsion des Wasser-in-Öl-Typs (E) , umfassend pro 100 % ihrer Masse:

a) - 10 Massen-% bis 80 Massen-% eines vernetzten Polymers (P), das aus der Polymerisation von Folgendem stammt, pro 100 Mol-%:

($a_1$) - Monomereinheiten in einem Anteil von mehr als oder gleich 30 Mol-% und weniger als oder gleich 100 Mol-%, die von einem Monomer stammen, das eine partiell versalzte oder vollständig versalzte starke-SäureFunktion trägt; und
($a_2$) - optional Monomereinheiten in einem Anteil von mehr als 0 Mol-% und weniger als oder gleich 70 %, die von mindestens einem Monomer stammen, das aus den Elementen der aus Acrylsäure, Methacrylsäure, Itaconsäure, Maleinsäure, 3-Methyl-3-[(1-oxo-2-propenyl)amino]butansäure bestehenden Gruppe ausgewählt ist, wobei die Carboxylfunktion dieser Monomere in der Säureform, partiell versalzt oder vollständig versalzt vorliegt, und/oder aus den Elementen der aus (2-Hydroxyethyl)acrylat, (2,3-Dihydroxypropyl)acrylat, (2-Hydroxyethyl)methacrylat, (2,3-Dihydroxypropyl)methacrylat oder Vinylpyrrolidon bestehenden Gruppe ausgewählt ist;
($a_3$) - Monomereinheiten in einem Anteil von mehr als 0 Mol-% und weniger als oder gleich 1 Mol-%, die von mindestens einem diethylenisch oder polyethylenisch vernetzenden Monomer (AR) stammen; wobei selbstverständlich ist, dass die Summe der molaren Anteile der Monomereinheiten ($a_1$), ($a_2$) und ($a_3$) gleich 100 % ist;

b) - 5 Massen-% bis 50 Massen-% einer Fettphase, die aus mindestens einem Öl (H) besteht; und
c) -1 Massen-% bis 50 Massen-% Wasser;
d) - 0,5 Massen-% bis 10 Massen-% eines Emulgiersystems ($S_1$) des Wasser-in-Öl-Typs und
e) -2 Massen-% bis 10 Massen-% eines Emulgiersystems ($S_2$) des Öl-in-Wasser-Typs, das pro 100 % seiner Masse mindestens 50 Massen-% einer Zusammensetzung ($C_e$) umfasst, die pro 100 % ihrer Masse Folgendes umfasst:

$e_1$) - einen Anteil von mehr als oder gleich 20 Massen-% und weniger als oder gleich 80 Massen-% eines Verdünnungsmittels der Formel (I):

$$HO\text{-}[CH_2\text{-}CH(OH)\text{-}CH_2\text{-}O\text{-}]_n\text{-}H \qquad (I),$$

wobei n eine ganze Zahl größer als oder gleich 1 und kleiner als oder gleich 6 darstellt, oder ein Gemisch

dieser Verdünnungsmittel;

$e_2$) - einen Anteil von mehr als oder gleich 20 Massen-% und weniger als oder gleich 80 Massen-% einer Zusammensetzung ($C_{e2}$), die pro 100 % ihrer Masse Folgendes umfasst:

$e_{2\alpha}$) - einen Anteil von mehr als 0 Massen-% und weniger als oder gleich 4 Massen-% mindestens eines Alkohols der Formel (II):

$$C_mH_{2m+1}\text{-OH} \qquad \text{(II)},$$

wobei m eine gerade ganze Zahl größer als oder gleich 8 und kleiner als oder gleich 18 darstellt;

$e_{2\beta}$) - einen Anteil von mehr als oder gleich 96 Massen-% und weniger als 100 Massen-% einer Zusammensetzung ($C_{2\beta}$), umfassend:

$e_{2\beta2}$) - einen Anteil von mehr als oder gleich 60 Massen-% und weniger als oder gleich 90 Massen-% einer Zusammensetzung ($C_{2\beta2}$), die pro 100 % ihrer Masse Folgendes umfasst:

**$e_{2\beta21}$**) - einen Anteil von mehr als oder gleich 5 Massen-% und weniger als oder gleich 20 Massen-% einer Zusammensetzung ($C_{21}$), dargestellt durch die Formel (III) :

$$R_{21}\text{-O-}(G_{21})_r\text{-H} \qquad \text{(III)},$$

wobei $R_{21}$ einen n-Dodecylrest darstellt, $G_{21}$ den Rest eines reduzierenden Zuckers darstellt und r eine Dezimalzahl größer als oder gleich 1,05 und kleiner als oder gleich 5,00 darstellt, wobei die Zusammensetzung ($C_{21}$) aus einem Gemisch der Verbindungen der Formeln ($III_1$), ($III_2$), ($III_3$), ($III_4$) und ($III_5$) :

$$R_{21}\text{-O-}(G_{21)1}\text{-H} \qquad (III_1,$$

$$R_{21}\text{-O-}(G_{21)2}\text{-H} \qquad (III_2),$$

$$R_{21}\text{-O-}(G_{21)3}\text{-H} \qquad (III_3),$$

$$R_{21}\text{-O-}(G_{21)4}\text{-H} \qquad (III_4),$$

$$R_{21}\text{-O-}(G_{21)5}\text{-H} \qquad (III_5),$$

in molaren Anteilen der Verbindungen der Formeln ($III_1$), ($III_2$), ($III_3$), ($III_4$) und ($III_5$) besteht, die jeweils gleich $a_1$, $a_2$, $a_3$, $a_4$ und $a_5$ sind, so dass die Summe $a_1 + a_2 + a_3 + a_4 + a_5$ gleich eins ist und so dass die Summe $a_1 + 2a_2 + 3a_3 + 4a_4 + 5a_5$ gleich r ist;

**$e_{2\beta22}$**) - einen Anteil von mehr als oder gleich 10 Massen% und weniger als oder gleich 20 Massen-% einer Zusammensetzung ($C_{22}$), dargestellt durch die Formel (IV) :

$$R_{22}\text{-O-}(G_{22})_s\text{-H} \qquad \text{(IV)},$$

wobei $R_{22}$ einen n-Tetradecylrest darstellt, $G_{22}$ den Rest eines reduzierenden Zuckers darstellt und s eine Dezimalzahl größer als oder gleich 1,05 und kleiner als oder gleich 5,00 darstellt, wobei die Zusammensetzung ($C_{22}$) aus einem Gemisch der Verbindungen der Formeln ($IV_1$) ($IV_2$) ($IV_3$) ($IV_4$) und ($IV_5$) :

$$R_{22}\text{-O-}(G_{22})_1\text{-H} \qquad (IV_1),$$

$$R_{22}\text{-O-}(G_{22})_2\text{-H} \qquad (IV_2),$$

$$R_{22}\text{-O-}(G_{22})_3\text{-H} \qquad (IV_3),$$

$$R_{22}\text{-O-}(G_{22})_4\text{-H} \qquad (IV_4),$$

$$R_{22}\text{-O-}(G_{22})_5\text{-H} \qquad (IV_5),$$

in molaren Anteilen der Verbindungen der Formeln ($IV_1$), ($IV_2$), ($IV_3$), ($IV_4$) und ($IV_5$) besteht, die jeweils gleich $b_1$, $b_2$, $b_3$, $b_4$ und $b_5$ sind, so dass die Summe $b_1 + b_2 + b_3 + b_4 + b_5$ gleich eins ist und so dass die Summe $b_1 + 2b_2 + 3b_3 + 4b_4 + 5b_5$ gleich s ist;
**$e_{2\beta 23}$**) - einen Anteil von mehr als oder gleich 25 Massen% und weniger als oder gleich 40 Massen-% einer Zusammensetzung ($C_{23}$), dargestellt durch die Formel (V) :

$$R_{23}\text{-O-}(G_{23})_t\text{-H} \quad (V),$$

wobei $R_{23}$ einen n-Octylrest darstellt, $G_{23}$ den Rest eines reduzierenden Zuckers darstellt und t eine Dezimalzahl größer als oder gleich 1,05 und kleiner als oder gleich 5,00 darstellt, wobei die Zusammensetzung ($C_{23}$) aus einem Gemisch der Verbindungen der Formeln ($V_1$), ($V_2$), ($V_3$), ($V_4$) und ($V_5$) :

$$R_{23}\text{-O-}(G_{23})_1\text{-H} \quad (V_1),$$

$$R_{23}\text{-O-}(G_{23})_2\text{-H} \quad (V_2),$$

$$R_{23}\text{-O-}(G_{23})_3\text{-H} \quad (V_3),$$

$$R_{23}\text{-O-}(G_{23})_4\text{-H} \quad (V_4),$$

$$R_{23}\text{-O-}(G_{23})_5\text{-H} \quad (V_5),$$

in molaren Anteilen der Verbindungen der Formeln ($V_1$), ($V_2$), ($V_3$), ($V_4$) und ($V_5$) besteht, die jeweils gleich $c_1$, $c_2$, $c_3$, $c_4$ und $c_5$ sind, so dass die Summe $c_1 + c_2 + c_3 + c_4 + c_5$ gleich eins ist und so dass die Summe $c_1 + 2c_2 + 3c_3 + 4c_4 + 5c_5$ gleich t ist;
**$e_{2\beta 24}$**) - einen Anteil von mehr als oder gleich 30 Massen% und weniger als oder gleich 55 Massen-% einer Zusammensetzung ($C_{24}$), dargestellt durch die Formel (VI) :

$$R_{24}\text{-O-}(G_{24})_u\text{-H} \quad (VI),$$

wobei $R_{24}$ einen n-Decylrest darstellt, $G_{24}$ den Rest eines reduzierenden Zuckers darstellt und u eine Dezimalzahl größer als oder gleich 1,05 und kleiner als oder gleich 5,00 darstellt, wobei die Zusammensetzung ($C_{24}$) aus einem Gemisch der Verbindungen der Formeln ($VI_1$), ($VI_2$), ($VI_3$), ($VI_4$) und ($VI_5$):

$$R_{24}\text{-O-}(G_{24})_1\text{-H} \quad (VI_1),$$

$$R_{24}\text{-O-}(G_{24})_2\text{-H} \quad (VI_2),$$

$$R_{24}\text{-O-}(G_{24})_3\text{-H} \quad (VI_3),$$

$$R_{24}\text{-O-}(G_{24})_4\text{-H} \quad (VI_4),$$

$$R_{24}\text{-O-}(G_{24})_5\text{-H} \quad (VI_5),$$

in molaren Anteilen der Verbindungen der Formeln ($VI_1$), ($VI_2$), ($VI_3$), ($VI_4$) und ($VI_5$) besteht, die jeweils gleich $d_1$, $d_2$, $d_3$, $d_4$ und $d_5$ sind, so dass die Summe $d_1 + d_2 + d_3 + d_4 + d_5$ gleich eins ist und so dass die Summe $d_1 + 2d_2 + 3d_3 + 4d_4 + 5d_5$ gleich u ist; wobei selbstverständlich ist, dass die Summe der Massenanteile der Zusammensetzungen ($C_{21}$), ($C_{22}$), ($C_{23}$) und ($C_{24}$) gleich 100 % ist;
$e_{2\beta 3}$) - einen Anteil von mehr als oder gleich 10 Massen-% und weniger als oder gleich 40 Massen-% einer Zusammensetzung ($C_{2\beta 3}$), die pro 100 % ihrer Masse Folgendes umfasst:

$e_{2\beta 31}$) - einen Anteil von mehr als oder gleich 30 Massen% und weniger als oder gleich 50 Massen-% einer Zusammensetzung ($C_{31}$), dargestellt durch die Formel (VII):

$$R_{31}\text{-O-}(G_{31})_x\text{-H} \quad (VII)$$

wobei $R_{31}$ einen n-Hexadecylrest darstellt, $G_{31}$ den Rest eines reduzierenden Zuckers darstellt und x eine Dezimalzahl größer als oder gleich 1,05 und kleiner als oder gleich 5,00 darstellt, wobei die Zusammensetzung ($C_{31}$) aus einem Gemisch der Verbindungen der Formeln ($VII_1$), ($VII_2$), ($VII_3$), ($VII_4$) und ($VII_5$) :

$R_{31}$-O-$(G_{31})_1$-H (VII$_1$,

$R_{31}$-O-$(G_{31})_2$-H ($VII_2$),

$R_{31}$-O-$(G_{31})_3$-H ($VII_3$),

$R_{31}$-O-$(G_{31})_4$-H ($VII_4$),

$R_{31}$-O-$(G_{31})_5$-H ($VII_5$),

in molaren Anteilen der Verbindungen der Formeln ($VII_1$), ($VII_2$), ($VII_3$), ($VII_4$) und ($VII_5$) besteht, die jeweils gleich $a'_1$, $a'_2$, $a'_3$, $a'_4$ und $a'_5$ sind, so dass die Summe $a'_1 + a'_2 + a'_3 + a'_4 + a'_5$ gleich eins ist und so dass die Summe $a'_1 + 2a'_2 + 3a'_3 + 4a'_4 + 5a'_5$ gleich x ist;
**e**$_{2\beta32}$) - einen Anteil von mehr als oder gleich 50 Massen% und weniger als oder gleich 70 Massen-% einer Zusammensetzung ($C_{32}$), dargestellt durch die Formel (VIII):

$R_{32}$-O-$(G_{32})_y$-H (VIII),

wobei $R_{32}$ einen n-Octadecylrest darstellt, $G_{32}$ den Rest eines reduzierenden Zuckers darstellt und y eine Dezimalzahl größer als oder gleich 1,05 und kleiner als oder gleich 5,00 darstellt, wobei die Zusammensetzung ($C_{32}$) aus einem Gemisch der Verbindungen der Formeln ($VIII_1$), ($VIII_2$), ($VIII_3$), ($VIII_4$) und ($VIII_5$) :

$R_{32}$-O-$(G_{32})_1$-H ($VIII_1$),

$R_{32}$-O-$(G_{32})_2$-H ($VIII_2$),

$R_{32}$-O-$(G_{32})_3$-H ($VIII_3$),

$R_{32}$-O-$(G_{32})_4$-H ($VIII_4$),

$R_{32}$-O-$(G_{32})_5$-H ($VIII_5$),

in molaren Anteilen der Verbindungen der Formeln ($VIII_1$), ($VIII_2$), ($VIII_3$), ($VIII_4$) und ($VIII_5$) besteht, die jeweils gleich $b'_1$, $b'_2$, $b'_3$, $b'_4$ und $b'_5$ sind, so dass die Summe $b'_1 + b'_2 + b'_3 + b'_4 + b'_5$ gleich 1 ist und so dass die Summe $b'_1 + 2b'_2 + 3b'_3 + 4b'_4 + 5b'_5$ gleich y ist; wobei selbstverständlich ist, dass die Summe der Massenanteile der Zusammensetzungen ($C_{31}$) und ($C_{32}$) gleich 100 % ist, und selbstverständlich ist, dass die Summe der Massenanteile der Verbindungen (a), (b), (c), (d) und (e) gleich 100 % ist.

**2.** Emulsion des Wasser-in-Öl-Typs (E) nach Anspruch 1, wobei das Polymer (P) ausgewählt ist aus:

- einem Homopolymer von partiell oder vollständig in Form des Natriumsalzes oder des Ammoniumsalzes versalzter 2-Methyl-2-[(1-oxo-2-propenyl)amino]-1-propansulfonsäure, das mit Triallylamin und/oder Methylen-bis(acrylamid) vernetzt ist;
- einem Copolymer von partiell oder vollständig in Form des Natriumsalzes oder des Ammoniumsalzes versalzter 2-Methyl-2-[(1-oxo-2-propenyl)amino]-1-propansulfonsäure und (2-Hydroxyethyl)acrylat, das mit Triallylamin und/oder Methylenbis(acrylamid) vernetzt ist;
- einem Copolymer von 2-Methyl-2-[(1-oxo-2-propenyl)amino]-1-propansulfonsäure und Acrylsäure, die partiell oder vollständig in Form des Natriumsalzes oder des Ammoniumsalzes versalzt sind, das mit Triallylamin und/oder Methylenbis(acrylamid) vernetzt ist;
- einem vernetzten Copolymer von partiell oder vollständig in Form des Natriumsalzes versalzter 2-Methyl-2-[(1-oxo-2-propenyl)amino]-1-propansulfonsäure (γ) und (2-Hydroxyethyl)acrylat (δ) in einem Molverhältnis (γ)/(δ) zwischen 30/70 und 90/10;
- einem vernetzten Copolymer von partiell oder vollständig in Form des Natriumsalzes versalzter 2-Methyl-2-[(1-oxo-2-propenyl)amino]-1-propansulfonsäure (γ) und (2-Hydroxyethyl)acrylat (δ) in einem Molverhältnis (γ)/(δ) zwischen 40/60 und 90/10;
- einem vernetzten Copolymer von partiell oder vollständig in Form des Natriumsalzes versalzter 2-Methyl-2-[(1-oxo-2-propenyl)amino]-1-propansulfonsäure (γ) und partiell oder vollständig in Form des Natriumsalzes versalzter Acrylsäure (ε) in einem Molverhältnis (γ)/(ε) von mehr als oder gleich 30/70 und weniger als oder gleich 90/10; und
- einem vernetzten Copolymer von partiell oder vollständig in Form des Natriumsalzes versalzter 2-Methyl-2-[(1-oxo-2-propenyl)amino]-1-propansulfonsäure (γ) und partiell oder vollständig in Form des Natriumsalzes versalzter Acrylsäure (ε) in einem Molverhältnis (γ)/(ε) von mehr als oder gleich 40/60 und weniger als oder gleich 90/10.

3. Emulsion des Wasser-in-Öl-Typs (E) nach einem der Ansprüche 1 oder 2, **dadurch gekennzeichnet, dass** das Verdünnungsmittel der Formel (I) Glycerin ist.

4. Emulsion des Wasser-in-Öl-Typs (E) nach einem der Ansprüche 1 bis 3, wobei in den Formeln (III), (IV), (V) und (VI) die Reste eines reduzierenden Zuckers $G_{21}$, $G_{22}$, $G_{23}$ und $G_{24}$ gleich sind und einen Glucoserest darstellen.

5. Emulsion des Wasser-in-Öl-Typs (E) nach einem der Ansprüche 1 bis 4, **dadurch gekennzeichnet, dass** in den Formeln (III), (IV), (V) und (VI) r, s, t und u jeweils unabhängig voneinander eine Dezimalzahl größer als oder gleich 1,05 und kleiner als oder gleich 2,5 darstellen.

6. Emulsion des Wasser-in-Öl-Typs (E) nach einem der Ansprüche 1 bis 5, **dadurch gekennzeichnet, dass** in den Formeln (VII) und (VIII) die Reste eines reduzierenden Zuckers $G_{31}$ und $G_{32}$ gleich sind und einen Glucoserest darstellen.

7. Emulsion des Wasser-in-Öl-Typs (E) nach einem der Ansprüche 1 bis 6, **dadurch gekennzeichnet, dass** in den Formeln (VII) und (VIII) x und y jeweils eine Dezimalzahl größer als oder gleich 1,05 und kleiner als oder gleich 2,5 darstellen.

8. Emulsion des Wasser-in-Öl-Typs (E) nach einem der Ansprüche 1 bis 7, **dadurch gekennzeichnet, dass** das Massenverhältnis:

$$\Delta = \text{Masse der Zusammensetzung } (C_{2\beta 2})/\text{Masse der Zusammensetzung } (C_{2\beta 3})$$

größer als oder gleich 1 und kleiner als oder gleich 10 ist.

9. Verwendung der Emulsion des Wasser-in-Öl-Typs (E) nach einem der Ansprüche 1 bis 8 als Verdickungsmittel und/oder Emulgator und/oder Stabilisierungsmittel für eine flüssige wässrige Detergenszusammensetzung für die Verwendung im Haushalt oder in der Industrie.

10. Flüssige wässrige Detergenszusammensetzung (F) für die Verwendung im Haushalt oder in der Industrie, **dadurch gekennzeichnet, dass** sie als Verdickungsmittel pro 100 % ihrer Gesamtmasse zwischen 0,1 und 10 Massen-% der Emulsion des Wasser-in-Öl-Typs (E) nach einem der Ansprüche 1 bis 8 umfasst.

11. Verwendung der flüssigen wässrigen Detergenszusammensetzung (F) für die Verwendung im Haushalt oder in der Industrie nach Anspruch 10 zum Reinigen harter Oberflächen.

12. Verfahren zum Reinigen einer harten Oberfläche, **dadurch gekennzeichnet, dass** es Folgendes umfasst:

mindestens einen Schritt a"$_1$) des Aufbringens der flüssigen wässrigen Detergenszusammensetzung (F) für die Verwendung im Haushalt oder in der Industrie nach Anspruch 10,
mindestens einen Schritt b"$_1$) des Nachwischens der harten Oberfläche.

## Claims

1. Emulsion of water-in-oil type (E) comprising, per 100% of its mass:

**a)** - from 10% by mass to 80% by mass of a crosslinked polymer (P) derived from the polymerization, per 100 mol%:

**($a_1$)** - of a proportion of greater than or equal to 30 mol% and less than or equal to 100 mol%, of monomer units derived from a monomer bearing a strong acid function, which is partially or totally salified; and
**($a_2$)** - optionally of a proportion of greater than 0 mol% and less than or equal to 70%, of monomer units derived from at least one monomer chosen from the elements of the group consisting of acrylic acid, methacrylic acid, itaconic acid, maleic acid, 3-methyl-3-[(1-oxo-2-propenyl)amino]butanoic acid, the carboxylic function of said monomers being in acid form, which are partially or totally salified, and/or from the elements of the group consisting of (2-hydroxyethyl) acrylate, (2,3-dihydroxypropyl) acrylate, (2-hydroxyethyl) methacrylate, (2,3-dihydroxypropyl) methacrylate or vinylpyrrolidone;
**($a_3$)** - of a proportion of greater than 0 mol% and less than or equal to 1 mol% of monomer units derived from at least one diethylenic or polyethylenic crosslinking monomer (AR); it being understood that the sum of the molar proportions of the monomer units ($a_1$), ($a_2$) and ($a_3$) is equal to 100%;

**b)** - from 5% by mass to 50% by mass of a fatty phase constituted of at least one oil (H); and
**c)** - from 1% by mass to 50% by mass of water;
**d)** - from 0.5% by mass to 10% by mass of an emulsifying system ($S_1$) of water-in-oil type; and
**e)** - from 2% by mass to 10% by mass of an emulsifying system ($S_2$) of oil-in-water type comprising, per 100% of its mass, at least 50% by mass of a composition ($C_e$) comprising, per 100% of its mass:

**$e_1$)** - A proportion of greater than or equal to 20% by mass and less than or equal to 80% by mass of a diluent of formula (I):

$$HO\text{-}[CH_2\text{-}CH(OH)\text{-}CH_2\text{-}O\text{-}]_n\text{-}H \qquad (I),$$

in which n is an integer greater than or equal to 1 and less than or equal to 6, or a mixture of said diluents;
**$e_2$)** - A proportion of greater than or equal to 20% by mass and less than or equal to 80% by mass of a composition ($C_{e2}$) comprising, per 100% of its mass:

**$e_{2\alpha}$)** - A proportion of greater than 0% and less than or equal to 4% by mass of at least one alcohol of formula (II) :

$$C_mH_{2m+1}\text{-}OH \qquad (II) ,$$

in which m is an even integer greater than or equal to 8 and less than or equal to 18;
**$e_{2\beta}$)** - A proportion of greater than or equal to 96% by mass and less than 100% by mass of a composition ($C_{2\beta}$) comprising:
**$e_{2\beta2}$)** - A proportion of greater than or equal to 60% by mass and less than or equal to 90% by mass of a composition ($C_{2\beta2}$) comprising, per 100% of its mass:

**$e_{2\beta21}$)** - A proportion of greater than or equal to 5% by mass and less than or equal to 20% by mass of a composition ($C_{21}$) represented by formula (III) :

$$R_{21}\text{-}O\text{-}(G_{21})r\text{-}H \qquad (III),$$

in which $R_{21}$ represents an n-dodecyl radical, $G_{21}$ represents a reducing sugar residue and r represents a decimal number greater than or equal to 1.05 and less than or equal to 5.00, said composition ($C_{21}$) consisting of a mixture of the compounds of formulae ($III_1$), ($111_2$), ($III_3$), ($III_4$) and ($III_3$):

$$R_{21}\text{-}O\text{-}(G_{21})_1\text{-}H \qquad (III_1),$$

$$R_{21}\text{-}O\text{-}(G_{21})_2\text{-}H \qquad (111_2),$$

$R_{21}$-O-$(G_{21})_3$-H (III$_3$),

$R_{21}$-O-$(G_{21})_4$-H (III$_4$),

$R_{21}$-O-$(G_{21})_5$-H (III$_5$),

in molar proportions of said compounds of formulae (III$_1$), (111$_2$), (III$_3$), (III$_4$) and (III$_3$)respectively equal to $a_1$, $a_2$, $a_3$, $a_4$ and $a_5$, such that the sum $a_1 + a_2 + a_3 + a_4$ + as is equal to 1, and such that the sum $a_1 + 2a_2 + 3a_3 + 4a_4 + 5a_5$ is equal to r;

**$e_{2\beta 22}$)** - A proportion of greater than or equal to 10% by mass and less than or equal to 20% by mass of a composition ($C_{22}$) represented by formula (IV) :

$R_{22}$-O-$(G_{22})_s$-H (IV),

in which $R_{22}$ represents an n-tetradecyl radical, $G_{22}$ represents a reducing sugar residue and s represents a decimal number greater than or equal to 1.05 and less than or equal to 5.00, said composition ($C_{22}$) consisting of a mixture of the compounds of formulae (IV$_1$), (IV$_2$), (IV$_3$), (IV$_4$) and (IV$_5$):

$R_{22}$-O-$(G_{22})_1$-H (IV$_1$),

$R_{22}$-O-$(G_{22})_2$-H (IV$_2$),

$R_{22}$-O-$(G_{22})_3$-H (IV$_3$),

$R_{22}$-O-$(G_{22})_4$-H (IV$_4$),

$R_{22}$-O-$(G_{22})_5$-H (IV$_5$),

in molar proportions of said compounds of formulae (IV$_1$), (IV$_2$), (IV$_3$), (IV$_4$) and (IV$_5$) respectively equal to $b_1$, $b_2$, $b_3$, $b_4$ and $b_5$, such that the sum $b_1 + b_2 + b_3 + b_4 + b_5$ is equal to 1, and such that the sum $b_1 + 2b_2 + 3b_3 + 4b_4 + 5b_5$ is equal to s;

**$e_{2\beta 23}$)** - A proportion of greater than or equal to 25% by mass and less than or equal to 40% by mass of a composition ($C_{23}$) represented by formula (V) :

$R_{23}$-O-$(G_{23})_t$-H (V),

in which $R_{23}$ represents an n-octyl radical, $G_{23}$ represents a reducing sugar residue and t represents a decimal number greater than or equal to 1.05 and less than or equal to 5.00, said composition ($C_{23}$) consisting of a mixture of the compounds of formulae (V$_1$), (V$_2$), (V$_3$), (V$_4$) and (V$_5$) :

$R_{23}$-O-$(G_{23})_1$-H (V$_1$),

$R_{23}$-O-$(G_{23})_2$-H (V$_2$),

$R_{23}$-O-$(G_{23})_3$-H (V$_3$),

$R_{23}$-O-$(G_{23})_4$-H (V$_4$),

$R_{23}$-O-$(G_{23})_5$-H (V$_5$),

in molar proportions of said compounds of formulae (V$_1$), (V$_2$), (V$_3$), (V$_4$) and (V$_5$) respectively equal to $c_1$, $c_2$, $c_3$, $c_4$ and $c_5$, such that the sum $c_1 + c_2 + c_3 + c_4 + c_5$ is equal to 1, and such that the sum $c_1 + 2c_2 + 3c_3 + 4c_4 + 5c_5$ is equal to t;

**$e_{2\beta 24}$)**- A mass proportion of greater than or equal to 30% by mass and less than or equal to 55% by mass of a composition ($C_{24}$) represented by formula (VI):

$$R_{24}\text{-O-}(G_{24})_u\text{-H} \quad (VI),$$

in which $R_{24}$ represents an n-decyl radical, $G_{24}$ represents a reducing sugar residue and u represents a decimal number greater than or equal to 1.05 and less than or equal to 5.00, said composition ($C_{24}$) consisting of a mixture of the compounds of formulae ($VI_1$), ($VI_2$), ($VI_3$), ($VI_4$) and ($VI_5$):

$$R_{24}\text{-O-}(G_{24})_1\text{-H} \quad (VI_1),$$

$$R_{24}\text{-O-}(G_{24})_2\text{-H} \quad (VI_2),$$

$$R_{24}\text{-O-}(G_{24})_3\text{-H} \quad (VI_3),$$

$$R_{24}\text{-O-}(G_{24})_4\text{-H} \quad (VI_4),$$

$$R_{24}\text{-O-}(G_{24})_5\text{-H} \quad (VI_5),$$

in molar proportions of said compounds of formulae ($VI_1$), ($VI_2$), ($VI_3$), ($VI_4$) and ($VI_5$) respectively equal to $d_1$, $d_2$, $d_3$, $d_4$ and $d_5$, such that the sum $d_1 + d_2 + d_3 + d_4 + d_5$ is equal to 1, and such that the sum $d_1 + 2d_2 + 3d_3 + 4d_4 + 5d_5$ is equal to u; it being understood that the sum of the mass proportions of compositions ($C_{21}$) , ($C_{22}$), ($C_{23}$) and ($C_{24}$) is equal to 100%;

**$e_{2\beta3}$)** - A proportion of greater than or equal to 10% by mass and less than or equal to 40% by mass of a composition ($C_{2\beta3}$) comprising, per 100% of its mass:

**$e_{2\beta31}$)** - A proportion of greater than or equal to 30% by mass and less than or equal to 50% by mass of a composition ($C_{31}$) represented by formula (VII):

$$R_{31}\text{-O-}(G_{31})_x\text{-H} \quad (VII)$$

in which $R_{31}$ represents an n-hexadecyl radical, $G_{31}$ represents a reducing sugar residue and x represents a decimal number greater than or equal to 1.05 and less than or equal to 5.00, said composition ($C_{31}$) consisting of a mixture of the compounds of formulae ($VII_1$), ($VII_2$), ($VII_3$), ($VII_4$) and ($VII_5$) :

$$R_{31}\text{-O-}(G_{31})_1\text{-H} \quad (VII_1),$$

$$R_{31}\text{-O-}(G_{31})_2\text{-H} \quad (VII_2),$$

$$R_{31}\text{-O-}(G_{31})_3\text{-H} \quad (VII_3),$$

$$R_{31}\text{-O-}(G_{31})_4\text{-H} \quad (VII_4),$$

$$R_{31}\text{-O-}(G_{31})_5\text{-H} \quad (VII_5),$$

in molar proportions of said compounds of formulae ($VII_1$), ($VII_2$), ($VII_3$), ($VII_4$) and ($VII_5$) respectively equal to $a'_1$, $a'_2$, $a'_3$, $a'_4$ and $a'_5$, such that the sum $a'_1 + a'_2 + a'_3 + a'_4 + a'_5$ is equal to 1, and such that the sum $a'_1 + 2a'_2 + 3a'_3 + 4a'_4 + 5a'_5$ is equal to x;

**$e_{2\beta32}$)** - A proportion of greater than or equal to 50% by mass and less than or equal to 70% by mass of a composition ($C_{32}$) represented by formula (VIII):

$$R_{32}\text{-O-}(G_{32})_y\text{-H} \quad (VIII),$$

in which $R_{32}$ represents an n-octadecyl radical, $G_{32}$ represents a reducing sugar residue and y represents a decimal number greater than or equal to 1.05 and less than or equal to 5.00, said composition ($C_{32}$) consisting of a mixture of the compounds of formulae ($VIII_1$), ($VIII_2$), ($VIII_3$), ($VIII_4$) and ($VIII_5$) :

$$R_{32}\text{-O-}(G_{32})_1\text{-H} \quad (VIII_1),$$

$R_{32}$-O-$(G_{32})_2$-H (VIII$_2$),

$R_{32}$-O-$(G_{32})_3$-H (VIII$_3$),

$R_{32}$-O-$(G_{32})_4$-H (VIII$_4$),

$R_{32}$-O-$(G_{32})_5$-H (VIII$_5$),

in molar proportions of said compounds of formulae (VIII$_1$), (VIII$_2$), (VIII$_3$), (VIII$_4$) and (VIII$_5$) respectively equal to $b'_1$, $b'_2$, $b'_3$, $b'_4$ and $b'_5$, such that the sum $b'_1 + b'_2 + b'_3 + b'_4 + b'_5$ is equal to 1, and such that the sum $b'_1 + 2b'_2 + 3b'_3 + 4b'_4 + 5b'_5$ is equal to y; it being understood that the sum of the mass proportions of compositions ($C_{31}$) and ($C_{32}$) is equal to 100%; and it being understood that the sum of the mass proportions of compounds (a), (b), (c), (d) and (e) is equal to 100%.

**2.** Emulsion of water-in-oil type (E) as defined in Claim 1, in which the polymer (P) is chosen from:

- a homopolymer of 2-methyl-2-[(1-oxo-2-propenyl)amino]-1-propanesulfonic acid which is partially or totally salified in sodium salt or ammonium salt form, crosslinked with triallylamine and/or methylenebis(acrylamide);
- a copolymer of 2-methyl-2-[(1-oxo-2-propenyl)amino]-1-propanesulfonic acid which is partially or totally salified in sodium salt or ammonium salt form, and of (2-hydroxyethyl)acrylate, crosslinked with triallylamine and/or methylenebis(acrylamide);
- a copolymer of 2-methyl-2-[(1-oxo-2-propenyl)amino]-1-propanesulfonic acid and of acrylic acid which are partially or totally salified in sodium salt or ammonium salt form, crosslinked with triallylamine and/or methylenebis(acrylamide);
- a crosslinked copolymer of 2-methyl-2-[(1-oxo-2-propenyl)amino]-1-propanesulfonic acid ($\gamma$) which is partially or totally salified in sodium salt form, and of (2-hydroxyethyl) acrylate ($\delta$) in a ($\gamma$)/($\delta$) mole ratio of between 30/70 and 90/10;
- a crosslinked copolymer of 2-methyl-2-[(1-oxo-2-propenyl)amino]-1-propanesulfonic acid ($\gamma$) which is partially or totally salified in sodium salt form, and of (2-hydroxyethyl)acrylate ($\delta$) in a ($\gamma$)/($\delta$) mole ratio of between 40/60 and 90/10;
- a crosslinked copolymer of 2-methyl-2-[(1-oxo-2-propenyl)amino]-1-propanesulfonic acid ($\gamma$) which is partially or totally salified in sodium salt form, and of acrylic acid ($\varepsilon$) which is partially or totally salified in sodium salt form, in a ($\gamma$)/($\varepsilon$) mole ratio of greater than or equal to 30/70 and less than or equal to 90/10; and
- a crosslinked copolymer of 2-methyl-2-[(1-oxo-2-propenyl)amino]-1-propanesulfonic acid ($\gamma$) which is partially or totally salified in sodium salt form, and of acrylic acid ($\varepsilon$) which is partially or totally salified in sodium salt form, in a ($\gamma$)/($\varepsilon$) mole ratio of greater than or equal to 40/60 and less than or equal to 90/10.

**3.** Emulsion of water-in-oil type (E) as defined in either of Claims 1 and 2, **characterized in that** the diluent of formula (I) is glycerol.

**4.** Emulsion of water-in-oil type (E) as defined in any one of Claims 1 to 3, **characterized in that**, in formulae (III), (IV), (V) and (VI), said reducing sugar residues $G_{21}$, $G_{22}$, $G_{23}$ and $G_{24}$ are identical and represent a glucose residue.

**5.** Emulsion of water-in-oil type (E) as defined in any one of Claims 1 to 4, **characterized in that**, in formulae (III), (IV), (V) and (VI), r, s, t and u respectively represent, independently of each other, a decimal number greater than or equal to 1.05 and less than or equal to 2.5.

**6.** Emulsion of water-in-oil type (E) as defined in any one of Claims 1 to 5, **characterized in that**, in formulae (VII) and (VIII), said reducing sugar residues $G_{31}$ and $G_{32}$ are identical and represent a glucose residue.

**7.** Emulsion of water-in-oil type (E) as defined in any one of Claims 1 to 6, **characterized in that**, in formulae (VII) and (VIII), x and y respectively represent a decimal number greater than or equal to 1.05 and less than or equal to 2.5.

**8.** Emulsion of water-in-oil type (E) as defined in any one of Claims 1 to 7, **characterized in that** the mass ratio:

$$\Delta = \text{mass of composition } (C_{2\beta 2})/\text{mass of composition } (C_{2\beta 3}),$$

is greater than or equal to 1 and less than or equal to 10.

**9.** Use of the emulsion of water-in-oil type (E) as defined in one of Claims 1 to 8, as a thickener and/or emulsifier and/or stabilizer for an aqueous liquid detergent composition for household or industrial use.

**10.** Aqueous liquid detergent composition (F) for household or industrial use, **characterized in that** it comprises as thickener, per 100% of its total mass, between 0.1% and 10% by mass of the emulsion of water-in-oil type (E) as defined in one of Claims 1 to 8.

**11.** Use of the aqueous liquid detergent composition (F) for household or industrial use as defined in Claim 10, for cleaning hard surfaces.

**12.** Process for cleaning a hard surface, **characterized in that** it comprises:

at least one step a"$_1$) of applying the aqueous liquid detergent composition (F) for household or industrial use as defined in Claim 10,
at least one step b"$_1$) of rinsing said hard surface.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016020622 A1
- EP 0939670 A
- EP 1173273 A


### Littérature non-brevet citée dans la description


- *CHEMICAL ABSTRACTS,* 3891-98-3